(19) Europäisches Patentamt / European Patent Office / Office européen des brevets

(11) **EP 4 228 289 A1**

(12) **EUROPEAN PATENT APPLICATION**
published in accordance with Art. 153(4) EPC

(43) Date of publication:
**16.08.2023 Bulletin 2023/33**

(21) Application number: **21877381.0**

(22) Date of filing: **24.09.2021**

(51) International Patent Classification (IPC):
***H04S 7/00*** *(2006.01)*

(52) Cooperative Patent Classification (CPC):
**H04S 7/00**

(86) International application number:
**PCT/JP2021/034952**

(87) International publication number:
**WO 2022/075080 (14.04.2022 Gazette 2022/15)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **06.10.2020 JP 2020168944**

(71) Applicant: **Sony Group Corporation
Tokyo 108-0075 (JP)**

(72) Inventors:
- **HATANAKA Mitsuyuki
  Tokyo 108-0075 (JP)**
- **CHINEN Toru
  Tokyo 108-0075 (JP)**

(74) Representative: **2SPL Patentanwälte PartG mbB
Landaubogen 3
81373 München (DE)**

(54) **INFORMATION PROCESSING DEVICE, METHOD, AND PROGRAM**

(57)    The present technique relates to an information processing device and method and a program that can reproduce contents on the basis of the intention of a contents producer.

The information processing device acquires listener position information, position information on a first reference viewpoint, object position information on a first object at the first reference viewpoint, position information on a second reference viewpoint, object position information on the first object at the second reference viewpoint, and object position information on a second object, and calculates position information on the first object at the viewpoint of a listener on the basis of the listener position information, the position information on the first reference viewpoint, the object position information at the first reference viewpoint, the position information on the second reference viewpoint, and the object position information at the second reference viewpoint. The present technique can be applied to an information processing device.

Fig. 2

**Description**

[Technical Field]

The present technique relates to an information processing device and method and a program and particularly relates to an information processing device and method and a program that can reproduce contents on the basis of the intention of a contents producer.

[Background Art]

For example, in a free viewpoint space, it is assumed that each object to be disposed in the space by using an absolute coordinate system is placed in a fixed layout (for example, see PTL 1).
In this case, the direction of each object viewed from any listening position is uniquely determined on the basis of the relationship between the coordinate position and the face orientation of a listener and an object in an absolute space, the gain of each object is uniquely determined on the basis of a distance from the listening position, and the sound of each object is reproduced.

[Citation List]

[Patent Literature]

[PTL 1]
WO 2019/198540

[Summary]

[Technical Problem]

The artistic quality of contents and points to be emphasized to listeners are also significant.
In some cases, objects desirably move to the front, for example, musical instruments or players to be emphasized in the contents of music or athletes to be emphasized in the contents of sports.
In some cases, each object is supposed to be disposed in a different layout, for example, an object is supposed to be always disposed at a fixed position with respect to a listener.
In light of such circumstances, the attraction of contents may be insufficiently found out in the simply physical relationship between a listener and an object.
The present technique has been made in view of such circumstances and is designed to reproduce contents on the basis of the intention of a contents producer.

[Solution to Problem]

An information processing device according to an aspect of the present technique includes: a listener-position information acquisition unit that acquires listener position information on the viewpoint of a listener; a reference-viewpoint information acquisition unit that acquires position information on a first reference viewpoint, object position information on a first object at the first reference viewpoint, position information on a second reference viewpoint, object position information on the first object at the second reference viewpoint, and object position information on a second object; and an object position calculation unit that calculates position information on the first object at the viewpoint of the listener on the basis of the listener position information, the position information on the first reference viewpoint, the object position information on the first object at the first reference viewpoint, the position information on the second reference viewpoint, and the object position information on the first object at the second reference viewpoint.
An information processing method or program according to an aspect of the present technique includes the steps of: acquiring listener position information on the viewpoint of a listener; acquiring position information on a first reference viewpoint, object position information on a first object at the first reference viewpoint, position information on a second reference viewpoint, object position information on the first object at the second reference viewpoint, and object position information on a second object; and calculating position information on the first object at the viewpoint of the listener on the basis of the listener position information, the position information on the first reference viewpoint, the object position information on the first object at the first reference viewpoint, the position information on the second reference viewpoint, and the object position information on the first object at the second reference viewpoint.
In an aspect of the present technique, listener position information on the viewpoint of a listener is acquired;

position information on a first reference viewpoint, object position information on a first object at the first reference viewpoint, position information on a second reference viewpoint, and object position information on the first object at the second reference viewpoint are acquired, object position information on a second object is acquired; and position information on the first object at the viewpoint of the listener is calculated on the basis of the listener position information, the position information on the first reference viewpoint, the object position information on the first object at the first reference viewpoint, the position information on the second reference viewpoint, and the object position information on the first object at the second reference viewpoint.

[Brief Description of Drawings]

[Fig. 1]

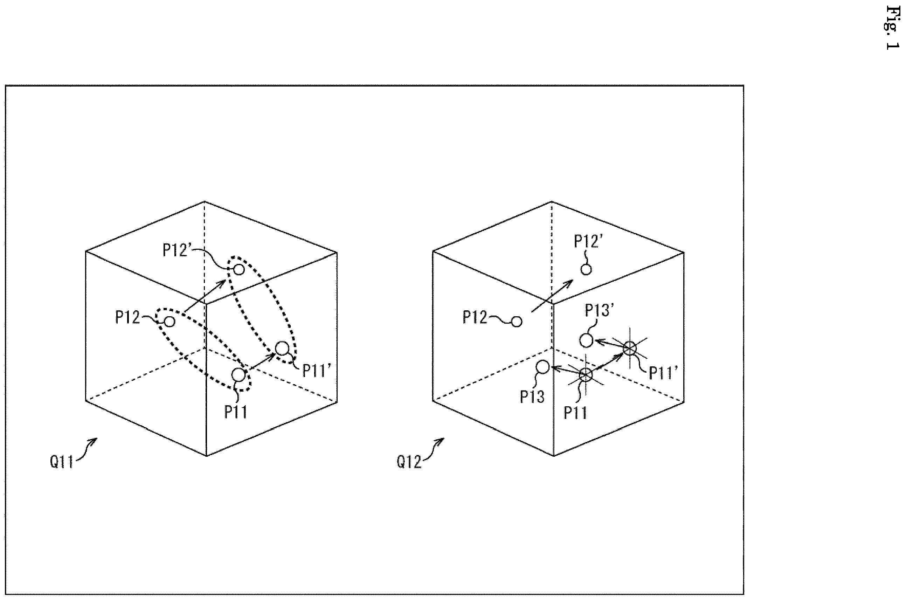

Fig. 1 is an explanatory drawing of an absolute-coordinate base interpolation object and a polar-coordinate base fixed object.
[Fig. 2]

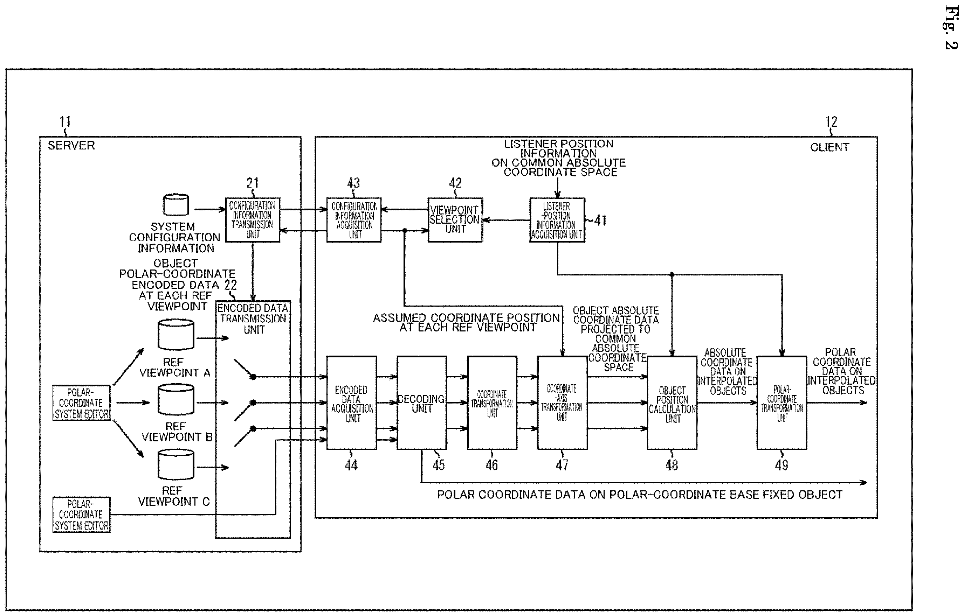

Fig. 2 illustrates a configuration example of a content reproducing system.
[Fig. 3]

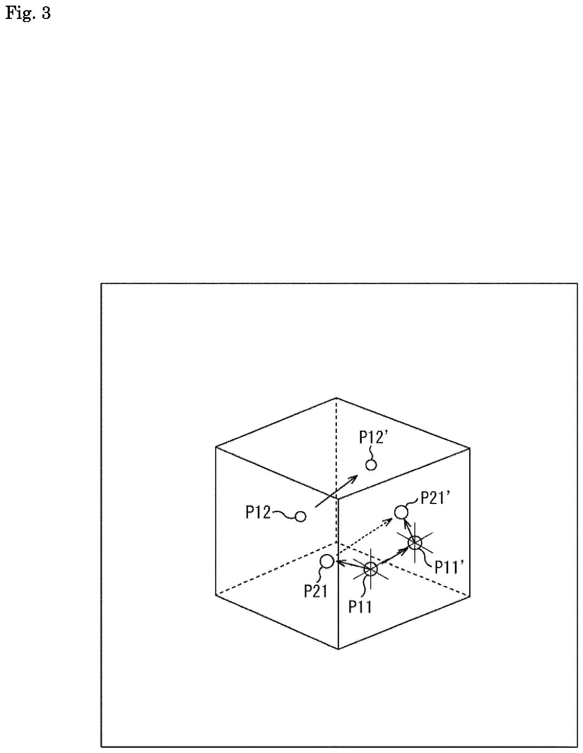

Fig. 3 is an explanatory drawing of the polar-coordinate base interpolation object.
[Fig. 4]

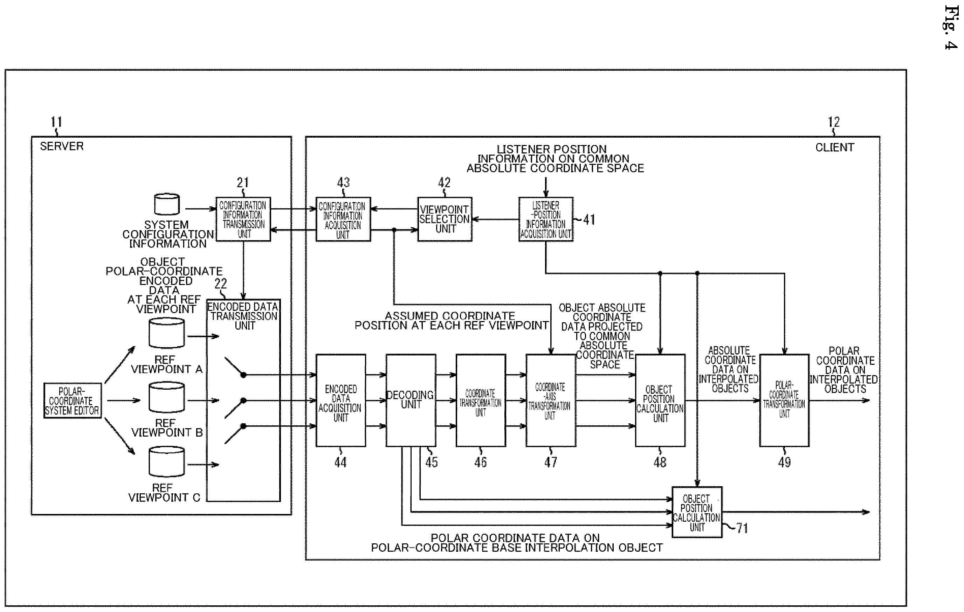

Fig. 4 illustrates a configuration example of the content reproducing system.
[Fig. 5]

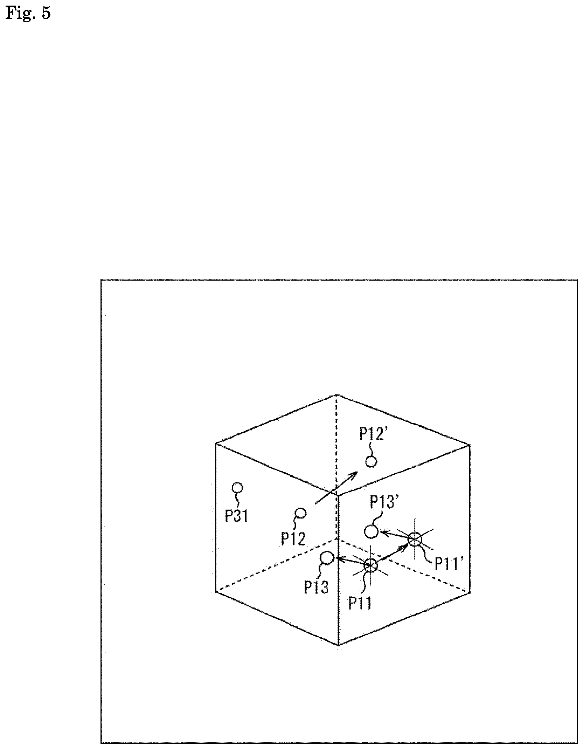

Fig. 5 is an explanatory drawing of the absolute-coordinate base fixed object.
[Fig. 6]

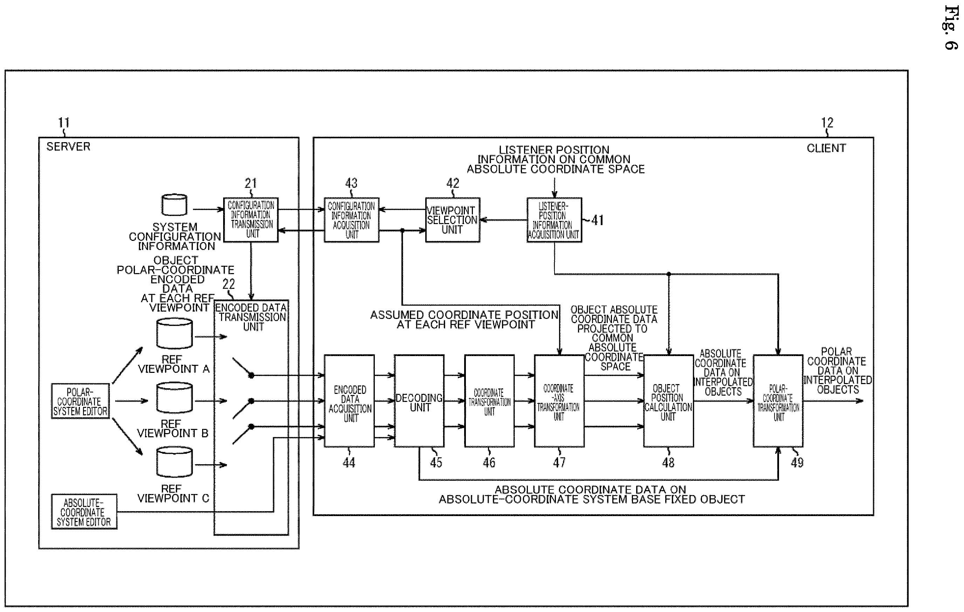

Fig. 6 illustrates a configuration example of the content reproducing system.
[Fig. 7]

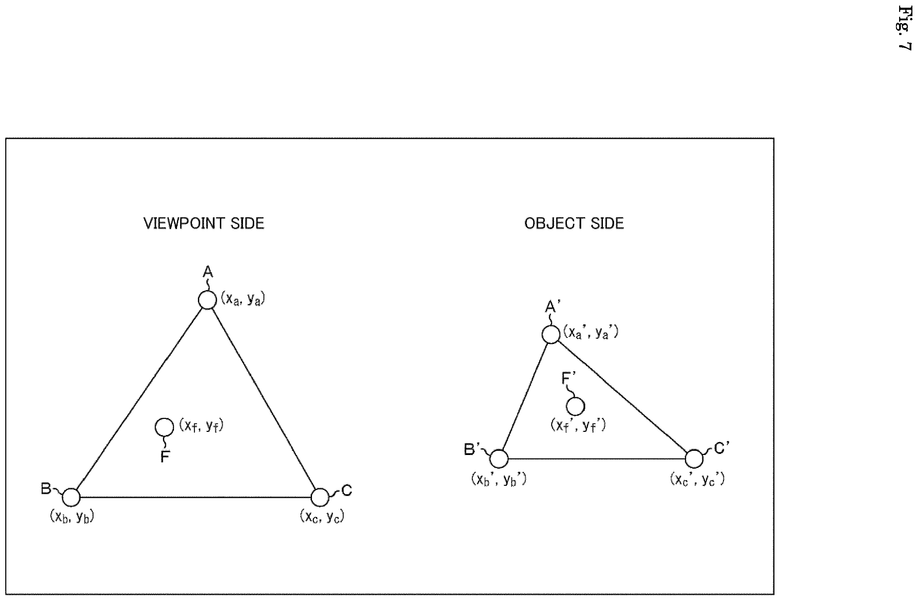

Fig. 7 is an explanatory drawing of the interpolation of object absolute-coordinate position information.
[Fig. 8]

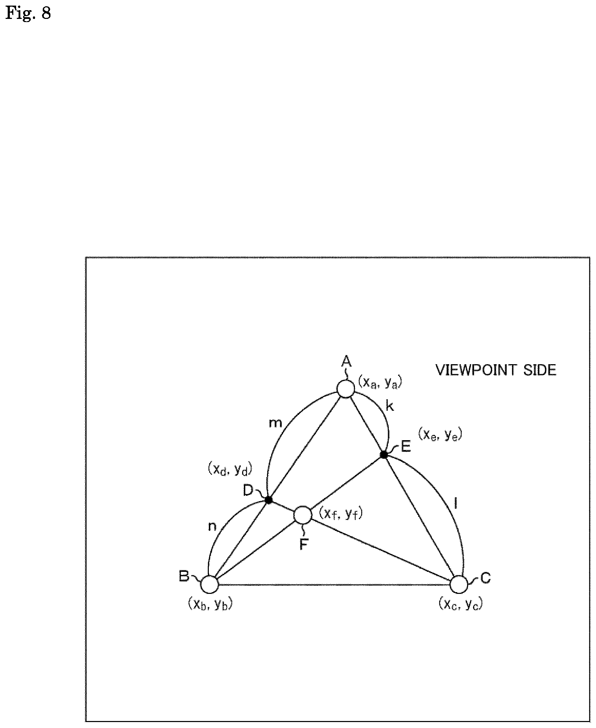

Fig. 8 is an explanatory drawing of an internal ratio in a triangular mesh on the viewpoint side.
[Fig. 9]

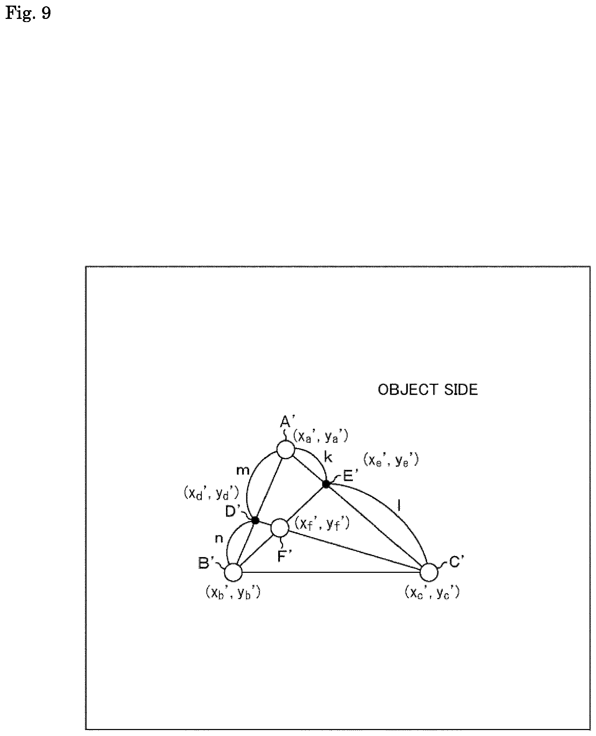

Fig. 9 is an explanatory drawing of the calculation of an object position.
[Fig. 10]

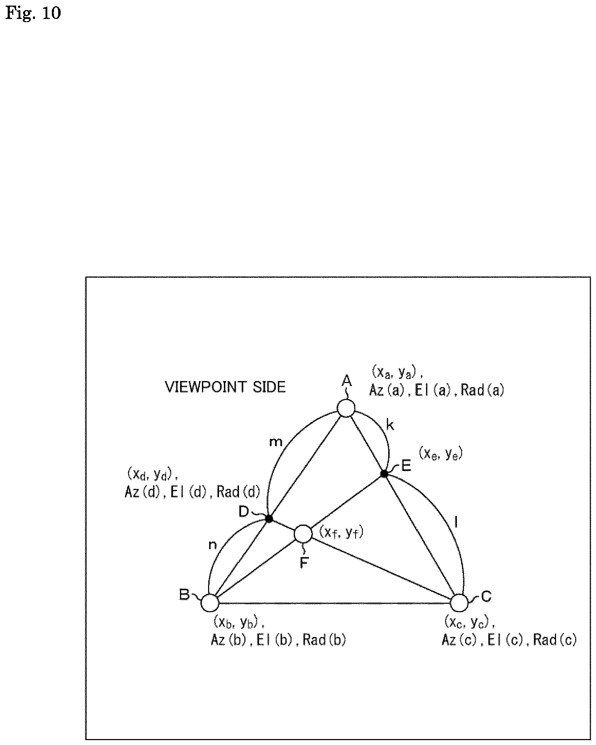

Fig. 10 is an explanatory drawing of the calculation of object polar-coordinate position information by interpolation.
[Fig. 11]

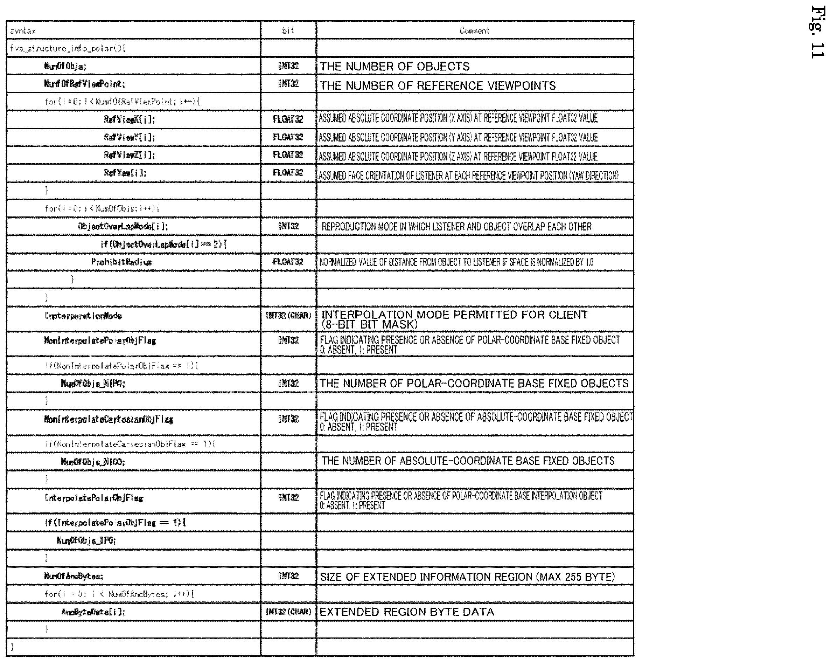

Fig. 11 indicates an example of system configuration information.
[Fig. 12]

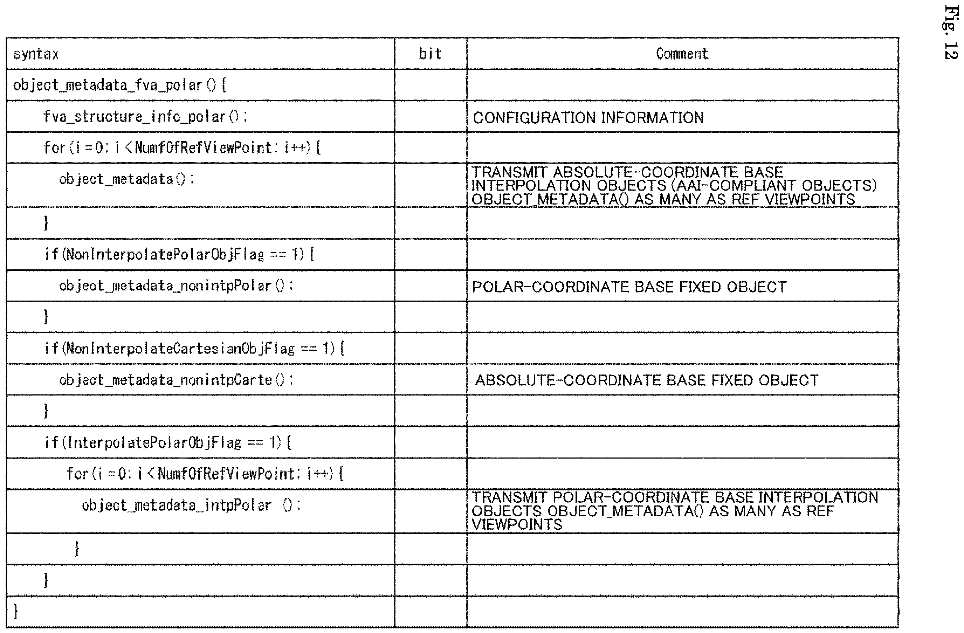

Fig. 12 indicates an example of a bit stream format.
[Fig. 13]

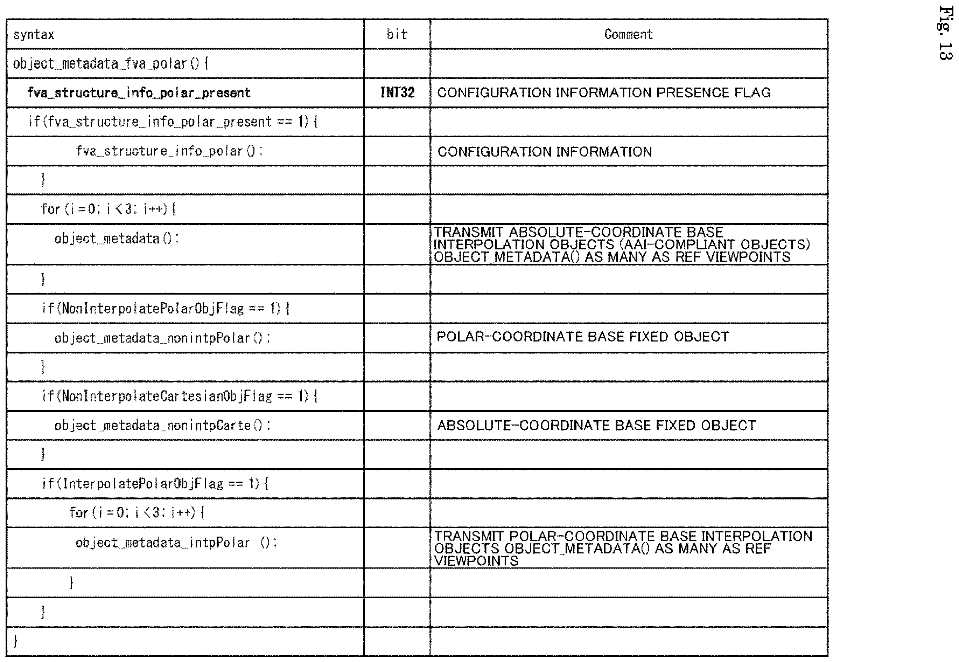

Fig. 13 indicates an example of the bit stream format.
[Fig. 14]

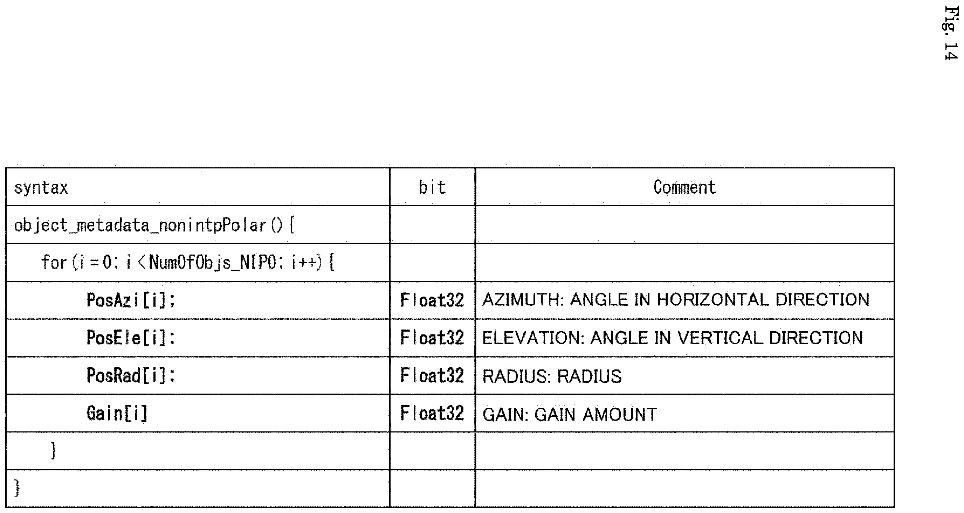

Fig. 14 indicates a metadata example of the polar-coordinate base fixed object.
[Fig. 15]

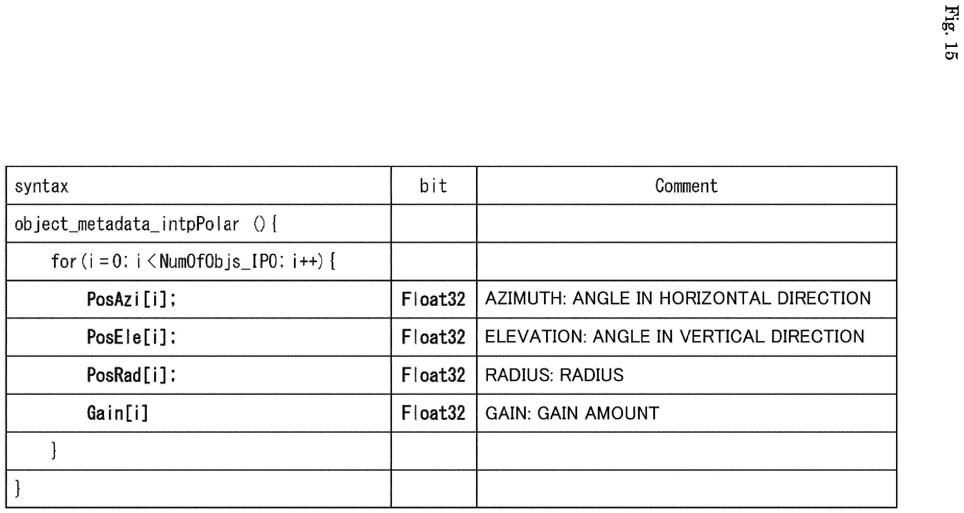

Fig. 15 indicates a metadata example of the polar-coordinate base interpolation object.
[Fig. 16]

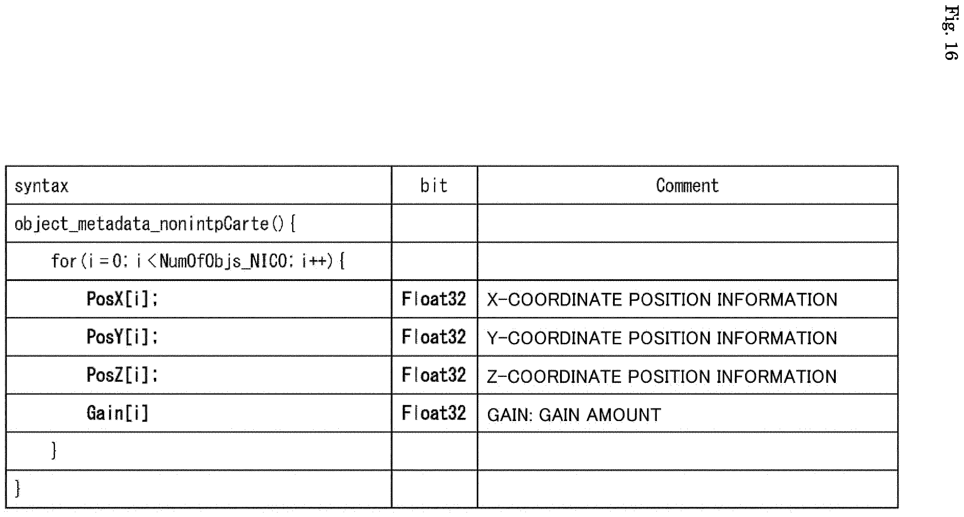

Fig. 16 indicates a metadata example of the absolute-coordinate base fixed object.
[Fig. 17]

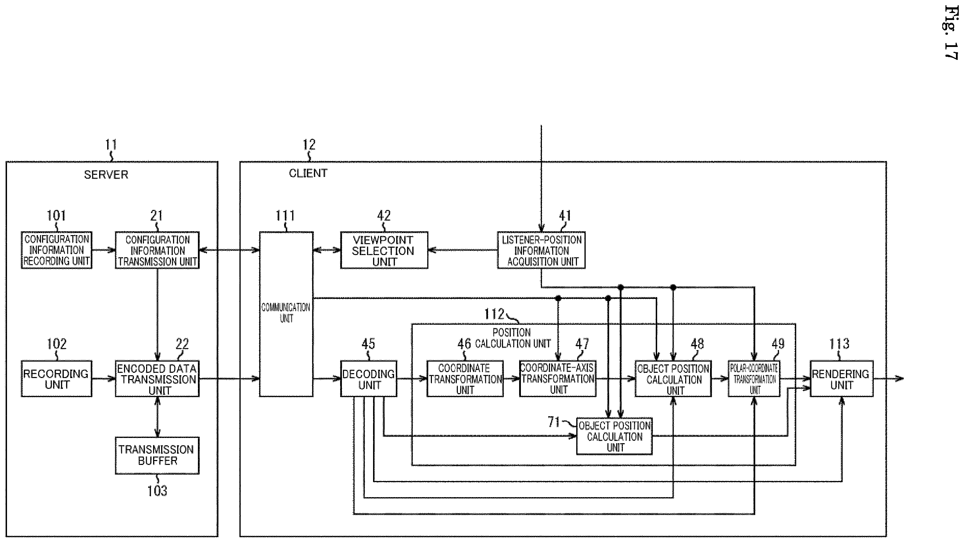

Fig. 17 illustrates a configuration example of the content reproducing system.
[Fig. 18]

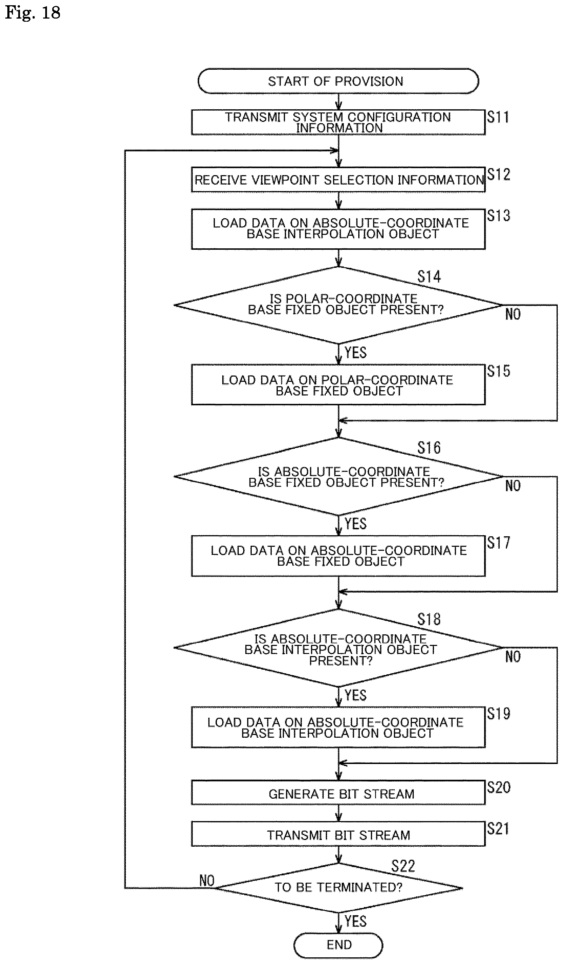

Fig. 18 is a flowchart for explaining provision.
[Fig. 19]

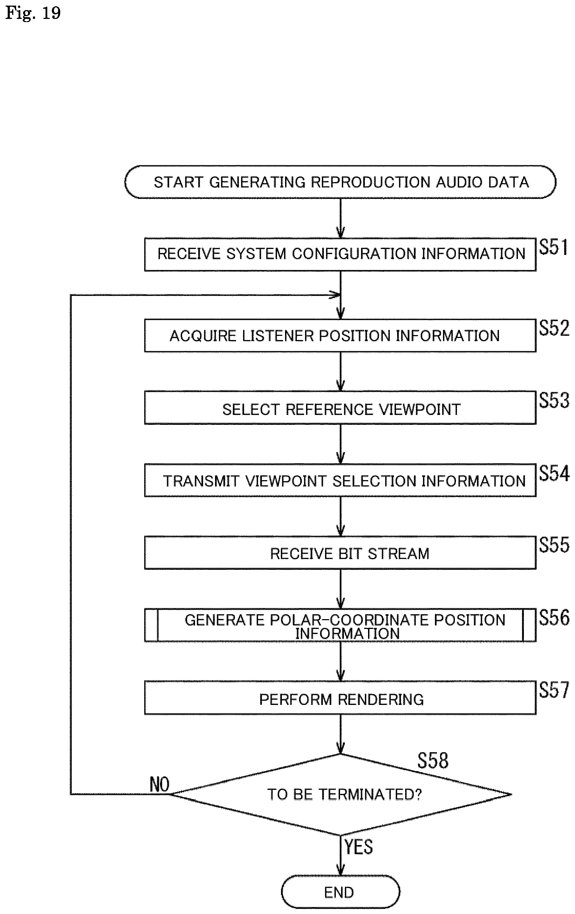

Fig. 19 is a flowchart for explaining the generation of reproduction audio data.
[Fig. 20]

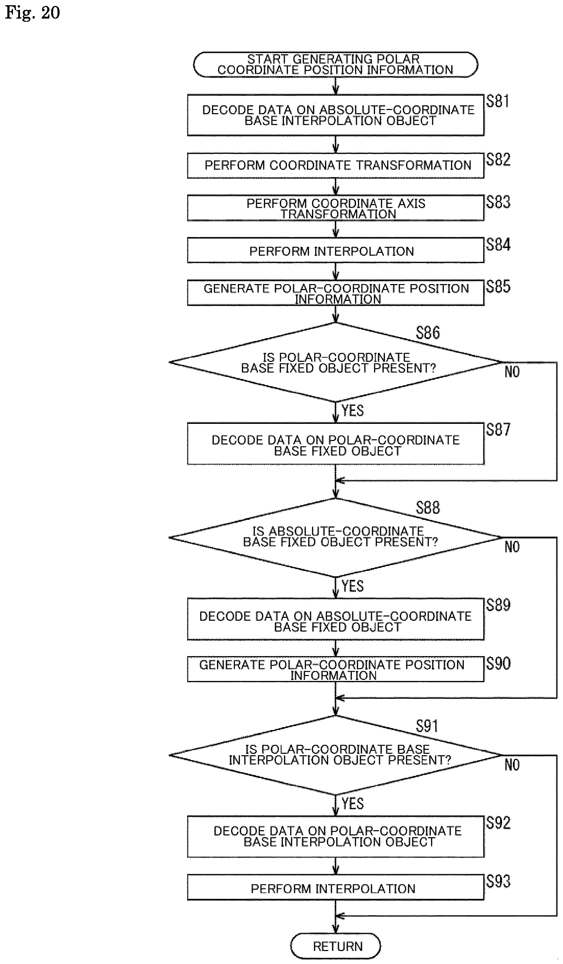

Fig. 20 is a flowchart for explaining the generation of polar-coordinate position information.
[Fig. 21]

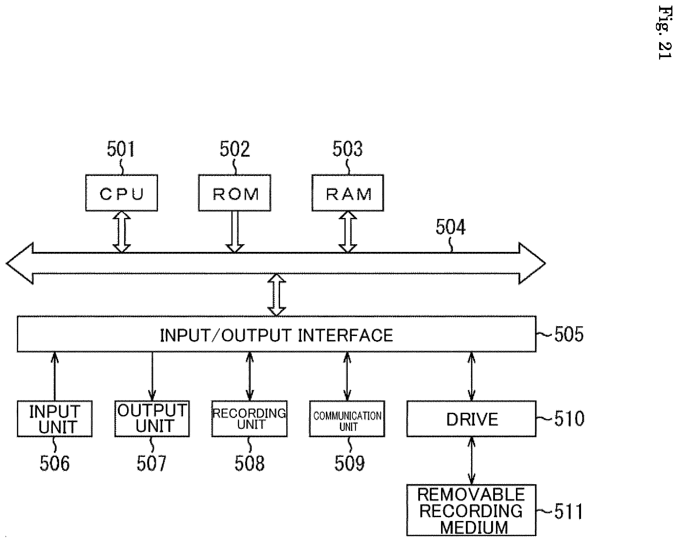

Fig. 21 illustrates a configuration example of a computer.

[Description of Embodiments]

Embodiments to which the present technique is applied will be described below with reference to the accompanying drawings.

<First Embodiment>

<Present Technique>

The present technique is designed to obtain a more flexible object layout by preparing multiple types of objects having different coordinate representations such as an origin position and a coordinate form, thereby reproducing contents on the basis of the intention of a contents producer.

For example, in a free viewpoint space where Artistic Intent is used, any object position can be generated by interpolation using absolute coordinates with respect to a plurality of reference viewpoints or polar coordinate data based on the orientation of a listener.

In addition to such an object, if an object is to be always disposed at a fixed position with respect to a listener, an object layout cannot be expressed regardless of the listener because the orientation of the listener is considered in the foregoing technique.

If an object is to be disposed at an absolute position in a free viewpoint space regardless of the position of a listener, the foregoing technique needs to calculate backward an absolute fixed object at each reference viewpoint as relative layout information, resulting in an undesirable situation in light of computational complexity and accuracy.

Thus, in the present technique, four types (kinds) of objects are available: an absolute-coordinate base interpolation object, a polar-coordinate base fixed object, a polar-coordinate base interpolation object, and an absolute-coordinate base fixed object. This can reproduce contents on the basis of the intention of a contents producer.

For example, in free viewpoint audio using Audio Artistic Intent according to the present technique, information on object layouts at a plurality of reference viewpoints is produced in advance on the assumption that the reference viewpoints are produced by a contents producer.

A listener can freely move to positions other than the reference viewpoints.

If the listener is located at a position different from the reference viewpoint, interpolation is performed on the basis of position information on objects at the reference viewpoints surrounding the position of the listener, thereby calculating position information on an object corresponding to the current position of the listener.

Thus, for example, when the listener moves from a position P11 to a position P11' in a free viewpoint space as indicated by an arrow Q11 in Fig. 1, the position of the same object moves from a position P12 to a position P12' according to the movement of the listener.

Hence, spatial acoustics can be reproduced at a free viewpoint position on the basis of the intention of a contents producer.

Hereinafter, such an object will be referred to as an absolute-coordinate base interpolation object.

An absolute-coordinate base interpolation object is located at a position in a free viewpoint space with respect to each of the reference viewpoints. If a listener is located at a position different from the reference viewpoint, the position of the absolute-coordinate base interpolation object is determined by interpolation on the basis of the positions of absolute-coordinate base interpolation objects determined with respect to multiple reference viewpoints surrounding the listener.

Thus, the position of the absolute-coordinate base interpolation object changes depending upon the position or orientation of the listener in the free viewpoint sp ace.

In consideration of a guide support system that depends upon, for example, the acoustic AR (Augmented Reality) of sound or the arrival direction of sound among systems in which such an absolute-coordinate base interpolation object is used, an object needs to be fixed with respect to a listener regardless of the position and orientation of the listener in a free viewpoint space. Hereinafter, such an object will be referred to as a polar-coordinate base fixed object.

For example, when the listener moves from a position P11 to a position P11' in a free viewpoint space as indicated by an arrow Q12 in Fig. 1, the polar-coordinate base fixed object moves from, for example, a position P13 to a position P13', accordingly. At this point, when viewed from the listener, the polar-coordinate base fixed object is always located at the same position, e.g., on the left ahead of the listener before and after the movement.

The representation by the absolute-coordinate base interpolation object is based on mapping of an object on absolute coordinates in consideration of the orientation of the listener.

Thus, the representation cannot deal with an object having the property of being always located at the same position with respect to the listener. In the present technique, for the purpose of fixing an object with respect to a listener, an absolute-coordinate base interpolation object and a polar-coordinate base fixed object are combined to deal with an object designed for the purpose.

For example, a content reproducing system for dealing with an absolute-coordinate base interpolation object and a polar-coordinate base fixed object in this manner is configured as illustrated in Fig. 2.

The content reproducing system in Fig. 2 includes a server 11 and a client 12.

The server 11 includes a configuration information transmission unit 21 and an encoded data transmission unit 22.

The configuration information transmission unit 21 sends (transmits) prepared system configuration information to the client 12, receives viewpoint selection information or the like transmitted from the client 12, and supplies the information to the encoded data transmission unit 22.

In the content reproducing system, a plurality of listening positions on a predetermined common absolute coordinate space are specified (set) as the positions of reference viewpoints (hereinafter also referred to as reference viewpoint positions) by a contents producer.

In this case, the contents producer specifies (sets), as reference viewpoints in advance, a position to serve as the listening position of the listener on the common absolute coordinate space during the reproduction of contents, and a desirable orientation of the face of the listener at the position, that is, a desirable viewpoint for listening to the sound of the contents.

In the server 11, system configuration information and object polar-coordinate encoded data are prepared in advance. The system configuration is information on the reference viewpoints and the object polar-coordinate encoded data indicates the positions of absolute-coordinate base interpolation objects for the reference viewpoints.

In this case, the object polar-coordinate encoded data on an absolute-coordinate base interpolation object at each reference viewpoint is obtained by encoding object polar-coordinate position information indicating the relative position of the absolute-coordinate base interpolation object viewed from each reference viewpoint.

In the object polar-coordinate position information, the relative position of the absolute-coordinate base interpolation object viewed from the reference viewpoint, that is, with respect to the reference viewpoint is represented by polar coordinates. The same absolute-coordinate base interpolation object is disposed, for each reference viewpoint, at a different absolute position in the common absolute coordinate space.

The configuration information transmission unit 21 transmits the system configuration information to the client 12 via a network or the like immediately after the start of an operation of the content reproducing system, that is, immediately after a connection to, for example, the client 12 is established. The system configuration information may be properly resent to the client 12 at a proper timing after the connection is established.

The encoded data transmission unit 22 selects two or more of the reference viewpoints on the basis of the viewpoint selection information supplied from the configuration information transmission unit 21 and transmits object polar-coordinate encoded data on absolute-coordinate base interpolation objects at the selected reference viewpoints to the client 12 via a network or the like.

In this case, the viewpoint selection information is information on the reference viewpoints selected by, for example, the client 12.

Thus, the object polar-coordinate encoded data on the absolute-coordinate base interpolation objects at the selected reference viewpoints requested from the client 12 is acquired in the encoded data transmission unit 22 and is transmitted to the client 12.

Hereinafter, it is assumed that three reference viewpoints are selected (specified) by the viewpoint selection information.

Furthermore, in the server 11, object polar-coordinate encoded data on a polar-coordinate base fixed object is prepared in addition to the object polar-coordinate encoded data on the absolute-coordinate base interpolation objects.

The object polar-coordinate encoded data on the polar-coordinate base fixed object is obtained by encoding object polar-coordinate position information indicating the relative positions of absolute-coordinate base interpolation objects viewed from a listener, that is, with respect to the listener. The object polar-coordinate position information is position information represented by polar coordinates.

The object polar-coordinate position information on the polar-coordinate base fixed object is different from the object polar-coordinate position information on the absolute-coordinate base interpolation object in that the object polar-coordinate position information is obtained with an origin at (with respect to) the position of a listener instead of (an origin at) a reference viewpoint, more specifically, with respect to the position and orientation of the listener.

Even if the position and orientation of the listener are changed, the object polar-coordinate position information on the polar-coordinate base fixed object is not changed, so that a piece of object polar-coordinate encoded data is prepared for one polar-coordinate base fixed object.

In the encoded data transmission unit 22, the object polar-coordinate encoded data on the polar-coordinate base fixed object is acquired and is transmitted to the client 12.

The client 12 includes a listener-position information acquisition unit 41, a viewpoint selection unit 42, a configuration information acquisition unit 43, an encoded data acquisition unit 44, a decoding unit 45, a coordinate transformation unit 46, a coordinate-axis transformation unit 47, an object position calculation unit 48, and a polar-coordinate transformation unit 49.

The listener-position information acquisition unit 41 acquires listener position information on the absolute position of a listener (listening position) on the common absolute coordinate space in response to an operation for specification by a user (listener) and supplies the information to the viewpoint selection unit 42, the object position calculation unit 48, and the polar-coordinate transformation unit 49.

For example, in the listener position information, the position of the listener in the common absolute coordinate space is represented by absolute coordinates. Hereinafter, the coordinate system of absolute coordinates indicated by the listener position information will be also referred to as a common absolute coordinate system.

The viewpoint selection unit 42 selects three reference viewpoints surrounding the listening position on the basis of the system configuration information supplied from the configuration information acquisition unit 43 and the listener position information supplied from the listener-position information acquisition unit 41 and supplies viewpoint selection information on the selection result to the configuration information acquisition unit 43.

The configuration information acquisition unit 43 receives the system configuration information transmitted from the server 11, supplies the system configuration information to the viewpoint selection unit 42 and the coordinate-axis transformation unit 47, and transmits the viewpoint selection information, which is supplied from the viewpoint selection unit 42, to the server 11 via a network or the like.

In the following example, the client 12 includes the viewpoint selection unit 42 that selects the reference viewpoint on the basis of the listener position information and the system configuration information. The viewpoint selection unit 42 may be provided in the server 11.

The encoded data acquisition unit 44 receives the object polar-coordinate encoded data transmitted from the server 11 and supplies the information to the decoding unit 45. In other words, the encoded data acquisition unit 44 acquires the object polar-coordinate encoded data from the server 11.

The decoding unit 45 decodes the object polar-coordinate encoded data supplied from the encoded data acquisition unit 44.

The decoding unit 45 supplies the object polar-coordinate position information on the absolute-coordinate base interpolation object to the coordinate transformation unit 46, the object polar-coordinate position information being obtained by decoding.

Furthermore, the decoding unit 45 outputs the object polar-coordinate position information on the polar-coordinate base fixed object as polar-coordinate position information to a rendering unit, which is not illustrated, the object polar-coordinate position information being obtained by decoding.

The coordinate transformation unit 46 performs coordinate transformation on the object polar-coordinate position information supplied from the decoding unit 45 and supplies object absolute-coordinate position information obtained by the coordinate transformation to the coordinate-axis transformation unit 47.

In the coordinate transformation unit 46, coordinate transformation is performed to transform polar coordinates into absolute coordinates. Thus, the object polar-coordinate position information on polar coordinates indicating the position of the absolute-coordinate base interpolation object viewed from a reference viewpoint is converted into object absolute-coordinate position information on absolute coordinates indicating the position of the absolute-coordinate base interpolation object in the absolute coordinate system with the origin located at the position of the reference viewpoint.

The coordinate-axis transformation unit 47 performs coordinate-axis transformation on the object absolute-coordinate position information supplied from the coordinate transformation unit 46 on the basis of the system configuration information supplied from the configuration information acquisition unit 43.

In this case, the coordinate-axis transformation is processing performed using coordinate transformation (coordinate-axis transformation) and an offset shift in combination. The coordinate-axis transformation obtains the object absolute-coordinate position information on the absolute coordinates of the absolute-coordinate base interpolation object projected to the common absolute coordinate space. In other words, the object absolute-coordinate position information obtained by coordinate-axis transformation is the absolute coordinates of the common absolute coordinate system (position information represented by absolute coordinates), the absolute coordinates indicating the absolute position of the absolute-coordinate base interpolation object on the common absolute coordinate space.

The object position calculation unit 48 performs interpolation on the basis of the listener position information supplied from the listener-position information acquisition unit 41 and the object absolute-coordinate position information supplied from the coordinate-axis transformation unit 47 and supplied the final object absolute-coordinate position information obtained by the interpolation to the polar-coordinate transformation unit 49. In this case, the final object absolute-coordinate position information is information on the position of the absolute-coordinate base interpolation object in the common absolute coordinate system when the viewpoint of the listener is located at the listening position indicated by the listener position information.

In the object position calculation unit 48, the absolute position of the absolute-coordinate base interpolation object, which corresponds to the listening position, in the common absolute coordinate space, that is, the absolute coordinates of the common absolute coordinate system are calculated as the final object absolute-coordinate position information from the listening position indicated by the listener position information and the positions of three reference viewpoints indicated by the viewpoint selection information. At this point, the object position calculation unit 48 acquires the system configuration information from the configuration information acquisition unit 43 or acquires the viewpoint selection information from the viewpoint selection unit 42 as necessary.

The polar-coordinate transformation unit 49 performs polar coordinate transformation on the object absolute-coordinate position information supplied from the object position calculation unit 48, on the basis of the listener position information supplied from the listener-position information acquisition unit 41, and then outputs the polar-coordinate position information obtained by the transformation to the rendering unit, which is not illustrated, in the subsequent stage.

In the polar-coordinate transformation unit 49, polar-coordinate transformation is performed to transform the object absolute-coordinate position information on the absolute coordinates of the common absolute-coordinate system into polar-coordinate position information on polar coordinates indicating the relative position of an object (absolute-coordinate base interpolation object) viewed from the listening position.

For example, rendering such as VBAP (Vector Based Amplitude Panning) requires polar-coordinate position information on the relative position of an object with respect to the listening position, as position information on the object.

Thus, for the absolute-coordinate base interpolation object, the object absolute-coordinate position information on the viewpoint of the listener is determined by interpolation. The object absolute-coordinate position information is converted into polar-coordinate position information and is supplied to the rendering unit.

In contrast, the object polar-coordinate position information on the polar-coordinate base fixed object is polar coordinates viewed from the viewpoint of the listener and thus is supplied as it is to the rendering unit without being interpolated or transformed into polar coordinates.

The polar-coordinate base fixed object allows an object layout without depending upon the position and orientation of the listener.

By preparing two different types of objects: the absolute-coordinate base interpolation object and the polar-coordinate base fixed object, contents can be reproduced on the basis of the intention of a contents producer.

The polar-coordinate base fixed object is fixed regardless of the position of the listener in the free viewpoint space. However, according to the intention of a contents producer, an object fixed regardless of the orientation of the listener may be disposed at a different position for each reference viewpoint.

In this case, each viewpoint has a different object layout with the listener located at the center as illustrated in, for example, Fig. 3. In rendering at the viewpoint, an object may be fixed with respect to the listener. In Fig. 3, parts corresponding to those of Fig. 1 are denoted by the same reference signs and a description thereof is omitted as necessary.

For example, in the example of Fig. 3, when the listener is located at a position P 11 in a free viewpoint space, an object is fixed at a position P21 regardless of the orientation of the listener.

If the listener is located at the same position, the object viewed from the listener is always located at the same position (direction), e.g., on the left ahead of the listener regardless of the orientation of the listener.

When the listener moves from the position P 11 to a position P 11', the object at the position P21 moves to a position P21', accordingly. If the listener is located at the position P11', the object viewed from the listener is always located at the same position regardless of the orientation of the listener.

At this point, the relative position of the object viewed from the listener at the position P11 is different from that viewed from the listener at the position P11'.

Hereinafter, such an object will be referred to as a polar-coordinate base interpolation object.

In the example of Fig. 3, the absolute-coordinate base interpolation object and the polar-coordinate base interpolation object are prepared with reference to Fig. 1, so that contents can be reproduced on the basis of the intention of a contents producer.

If the absolute-coordinate base interpolation object and the polar-coordinate base interpolation object are prepared, the content reproducing system is configured as illustrated in, for example, Fig. 4. In Fig. 4, parts corresponding to those of Fig. 2 are denoted by the same reference signs and a description thereof is omitted as necessary.

In the content reproducing system illustrated in Fig. 4, the server 11 includes the configuration information transmission unit 21 and the encoded data transmission unit 22 as in the example of Fig. 2.

In the server 11, the object polar-coordinate encoded data on the polar-coordinate base interpolation object is prepared for each reference viewpoint in addition to the object polar-coordinate encoded data on the absolute-coordinate base interpolation object.

The object polar-coordinate encoded data on the polar-coordinate base interpolation object at each reference viewpoint is obtained by encoding the object polar-coordinate position information indicating the relative position of the polar-coordinate base interpolation object viewed from each reference viewpoint.

The object polar-coordinate position information on the polar-coordinate base interpolation object has the same coordinate expression as the object polar-coordinate position information on the absolute-coordinate base interpolation object.

In other words, the object polar-coordinate position information on the polar-coordinate base interpolation object and the object polar-coordinate position information on the absolute-coordinate base interpolation object are both polar coordinates indicating a relative position viewed from the reference viewpoint serving as an origin.

As described above, the object polar-coordinate position information on the polar-coordinate base interpolation object has the same coordinate expression as the object polar-coordinate position information on the absolute-coordinate base interpolation object.

In the client 12, however, the object polar-coordinate position information on the polar-coordinate base interpolation object is subjected to different processing from the absolute-coordinate base interpolation object, thereby obtaining the polar-coordinate base interpolation object.

For three reference viewpoints indicated by the viewpoint selection information, the encoded data transmission unit 22 transmits the object polar-coordinate encoded data on the absolute-coordinate base interpolation object and the object polar-coordinate encoded data on the polar-coordinate base interpolation object to the client 12.

In the example of Fig. 4, the client 12 further includes an object position calculation unit 71 in addition to the configuration of Fig. 2.

In the decoding unit 45 of the client 12, the object polar-coordinate position information on the absolute-coordinate base interpolation object is supplied to the coordinate transformation unit 46 as in Fig. 2, the object polar-coordinate position information being obtained by decoding.

Moreover, the decoding unit 45 supplies the object polar-coordinate position information on the polar-coordinate base interpolation object at each reference viewpoint to the object position calculation unit 71, the object polar-coordinate position information being obtained by decoding.

The object position calculation unit 71 performs interpolation on the basis of the listener position information supplied from the listener-position information acquisition unit 41 and the object polar-coordinate position information on the polar-coordinate base interpolation object from the decoding unit 45. At this point, the object position calculation unit 71 acquires the system configuration information from the configuration information acquisition unit 43 or acquires the viewpoint selection information from the viewpoint selection unit 42 as necessary.

Thus, the object polar-coordinate position information on the polar-coordinate base interpolation object for the position of the listener (listening position) is obtained as polar-coordinate position information.

The polar-coordinate position information is polar coordinates indicating the relative position of the polar-coordinate base interpolation object viewed from the listening position when the viewpoint of the listener is located at the listening position indicated by the listener position information.

The object position calculation unit 71 outputs the polar-coordinate position information on the polar-coordinate base interpolation object to the rendering unit, which is not illustrated, in the subsequent stage, the polar-coordinate position information being obtained by interpolation.

In the object position calculation unit 71, the object polar-coordinate position information on reference viewpoints is used directly, that is, as polar coordinates for interpolation without being transformed into absolute coordinates, and the polar-coordinate position information indicating relative positions viewed from the listening position is generated.

As described above, the polar-coordinate base interpolation object is subjected to different processing from the absolute-coordinate base interpolation object. This can obtain the polar-coordinate base interpolation object that is viewed at a different position by the listener according to the listening position but is always fixed at the same position (direction) when viewed from the listener at the same listening position regardless of the orientation (viewpoint) of the listener.

For example, for the purpose of replicating a live venue, an object representing background noise or the like at the venue is disposed at an absolute position in a free viewpoint space regardless of the position of a listener as illustrated in, for example, Fig. 5. In Fig. 5, parts corresponding to those of Fig. 1 are denoted by the same reference signs and a description thereof is omitted.

In this example, a free viewpoint space has an object always located at the same position in the free viewpoint space regardless of the viewpoint of the listener, in addition to the absolute-coordinate base interpolation object and the polar-coordinate base fixed object. Hereinafter, such an object always located at the same position (fixed position) in a free viewpoint space (common absolute coordinate space) will be referred to as an absolute-coordinate base fixed object.

For example, in the example of Fig. 5, when the listener moves from a position P11 to a position P 11', the absolute-coordinate base interpolation object moves from a position P12 to a position P12' and the polar-coordinate base fixed object moves from a position P13 to a position P13'. Even when the listener moves from the position P11 to the position P11', the absolute-coordinate base fixed object stays at a position P31.

Such a behavior of the absolute-coordinate base fixed object may be represented by the absolute-coordinate base interpolation object. In this case, however, object polar-coordinate position information is determined by calculating backward an absolute fixed object at each reference viewpoint as relative layout information, resulting in many disadvantages such as excessive calculation and a demerit in terms of accuracy.

Hence, in the present technique, the absolute-coordinate base fixed object is additionally prepared as an object at a fixed absolute coordinate position, and the absolute-coordinate base fixed object is combined with the absolute-coordinate base interpolation object and the polar-coordinate base fixed object, achieving a reduction in computational complexity and a merit in terms of accuracy.

Specifically, for example, if the absolute-coordinate base interpolation object and the absolute-coordinate base fixed object are prepared, the content reproducing system is configured as illustrated in, for example, Fig. 6. In Fig. 6, parts corresponding to those of Fig. 2 are denoted by the same reference signs and a description thereof is omitted as necessary.

In the example of Fig. 6, the server 11 and the client 12 are identical in configuration to those in Fig. 2. In the server 11, object absolute-coordinate encoded data on the absolute-coordinate base fixed object is prepared in addition to the absolute-coordinate base interpolation object and the object polar-coordinate encoded data.

The object absolute-coordinate encoded data on the absolute-coordinate base fixed object is obtained by encoding the object absolute-coordinate position information on absolute coordinates indicating the absolute position of the absolute-coordinate base fixed object in the common absolute coordinate space (common absolute coordinate system).

The object absolute-coordinate position information on the absolute-coordinate base fixed object corresponds to the object absolute-coordinate position information on the absolute-coordinate base interpolation object, the object absolute-coordinate position information being obtained by the object position calculation unit 48 of the client 12.

For three reference viewpoints indicated by the viewpoint selection information, the encoded data transmission unit 22 transmits the object polar-coordinate encoded data on the absolute-coordinate base interpolation object and the object absolute-coordinate encoded data on the absolute-coordinate base fixed object to the client 12.

Thus, in the decoding unit 45 of the client 12, the object polar-coordinate encoded data and the object absolute-coordinate encoded data are decoded.

The decoding unit 45 supplies the decoded object polar-coordinate position information on the absolute-coordinate base interpolation object to the coordinate transformation unit 46 and the decoded object absolute-coordinate position information on the absolute-coordinate base fixed object to the polar-coordinate transformation unit 49.

The absolute-coordinate base fixed object is always fixed at the same position in the common absolute coordinate space regardless of the viewpoint of the listener, thereby eliminating the need for interpolation unlike the absolute-coordinate base interpolation object.

The object absolute-coordinate position information on the absolute-coordinate base fixed object may be handled as the object absolute-coordinate position information on the absolute-coordinate base interpolation object, the object absolute-coordinate position information being obtained by the object position calculation unit 48. Thus, the object absolute-coordinate position information is directly supplied to the polar-coordinate transformation unit 49 after being decoded.

The polar-coordinate transformation unit 49 performs polar-coordinate transformation on the object absolute-coordinate position information supplied from the decoding unit 45 as well as the object absolute-coordinate position information supplied from the object position calculation unit 48, on the basis of the listener position information from the listener-position information acquisition unit 41.

The polar-coordinate transformation unit 49 outputs the polar-coordinate position information on the absolute-coordinate base interpolation object and the polar-coordinate position information on the absolute-coordinate base fixed object to the rendering unit, which is not illustrated, in the subsequent stage, the polar-coordinate position information being obtained by the polar-coordinate transformation.

In the above example, a specific combination of the absolute-coordinate base interpolation object, the polar-coordinate base fixed object, the polar-coordinate base interpolation object, and the absolute-coordinate base fixed object was described. Any combination of the objects may be adopted in the present disclosure.

<Example of Interpolation>

Specific examples of interpolation performed in the object position calculation unit 48 and interpolation performed in the object position calculation unit 71 will be described below.

An example of interpolation performed in the object position calculation unit 48 on the basis of the object absolute-coordinate position information at each reference viewpoint will be described below.

For example, as illustrated on the left side of Fig. 7, it is assumed that object absolute-coordinate position information at any listening position F is determined by interpolation.

In this example, three reference viewpoints A, B, and C surround the listening position F and interpolation is performed using information on the reference viewpoints A to C.

Hereinafter, at the listening position F has an X coordinate and a Y coordinate are represented as $(x_f, y_f)$ in the common absolute coordinate system, that is, the XYZ coordinate system.

Likewise, at the positions of the reference viewpoint A, the reference viewpoint B, and the reference viewpoint C, X coordinates and Y coordinates are represented as $(x_a, y_a)$, $(x_b, y_b)$, and $(x_c, y_c)$, respectively.

In this case, as illustrated on the right side of Fig. 7, an object position F' at the listening position F is determined on the basis of the coordinates of an object position A', an object position B', and an object position C' that correspond to the reference viewpoint A, the reference viewpoint B, and the reference viewpoint C.

In this case, for example, the object position A' indicates the position of the object when the viewpoint is located at the reference viewpoint A, that is, the position of the absolute-coordinate base interpolation object, which is indicated by the object absolute-coordinate position information on the reference viewpoint A, in the common absolute coordinate system.

Furthermore, the object position F' indicates the position of the absolute-coordinate base interpolation object in the common absolute coordinate system when the listener is located at the listening position F, that is, a position indicated by the object absolute-coordinate position information serving as the output of the object position calculation unit 48.

Hereinafter, at the object position A', the object position B', and the object position C', X coordinates and Y coordinates are represented as $(x_a', y_a')$, $(x_b', y_b')$, and $(x_c', y_c')$, respectively, and an X coordinate and a Y coordinate at the object position F' are represented as $(x_\varepsilon', y_f')$.

Furthermore, in the following description, a triangular region surrounded by any three reference viewpoints such as the reference viewpoints A to C, that is, a triangular region formed by the three reference viewpoints will be referred to as a triangular mesh.

Since the common absolute coordinate space includes multiple reference viewpoints, a plurality of triangular meshes can be formed with the vertices at the reference viewpoints.

Similarly, in the following description, a triangular region surrounded (formed) by object positions such as the object positions A' to C' indicated by object absolute-coordinate position information at any three reference viewpoints will be referred to as a triangular mesh.

Coordinates indicating any position in the common absolute coordinate system (XYZ coordinate system) can be obtained from coordinates at the position in the xyz coordinate system and information on the reference viewpoints included in the system configuration information, more specifically, the positions of the reference viewpoints and the orientations of the listener at the reference viewpoints.

The xyz coordinate system is an absolute coordinate system with the origin (fiducial) at the position of the reference viewpoint. To simplify the description, it is assumed that a Z coordinate value in the XYZ coordinate system is equal to a z coordinate value in the xyz coordinate system.

According to the Ceva's theorem, by properly determining the internal ratios of the sides of a triangular mesh, any listening position in the triangular mesh formed by three reference viewpoints is uniquely determined at the intersection point of lines from the three vertices of the triangular mesh to the internally dividing points of the three sides that are not adjacent to the vertices.

This is established for all triangular meshes regardless of the shapes of the triangular meshes from a proof formula, by determining the configurations of the internal ratios of the three sides of the triangular meshes.

Hence, by determining the internal ratios of a triangular mesh including a listening position near a viewpoint, that is, with respect to a reference viewpoint and applying the internal ratios to an object, that is, a triangular mesh at the position of the object, a proper object position can be determined with respect to any listening position.

Referring to Figs. 8 and 9, an example of interpolation for determining object absolute-coordinate position information on the object position F' for the listening position F in Fig. 7 will be described below.

For example, as illustrated in Fig. 8, the X coordinates and Y coordinates of internally dividing points are first determined in a triangular mesh having reference viewpoints A to C with the listening position F included in the triangular mesh.

A point D denotes an intersection point of a straight line passing through the listening position F and the reference viewpoint C and a line AB from the reference viewpoint A to the reference viewpoint B, and $(x_a, y_d)$ denotes coordinates indicating the position of the point D on the XY plane. In other words, the point D is an internally dividing point on the line AB (side AB).

In this case, regarding an X coordinate and a Y coordinate that indicate the position of any point on a line CF from the reference viewpoint C to the listening position F and an X coordinate and a Y coordinate that indicate the position of any point on the line AB, relationships are established as in formula (1) below.

[Math. 1]

$$\text{Line CF}: \ Y = \alpha_1 X - \alpha_1 x_c + y_c, \text{ where } \alpha_1 = (y_c - y_f)/(x_c - x_f)$$
$$\text{Line AB}: \ Y = \alpha_2 X - \alpha_2 x_a + y_a, \text{ where } \alpha_2 = (y_b - y_a)/(x_b - x_a) \quad \cdots (1)$$

Since the point D is the intersection point of the straight line passing through the reference viewpoint C and the listening position F and the line AB, the coordinates $(x_a, y_d)$ of the point D on the XY plane can be determined from formula (1). The coordinates $(x_d, y_d)$ are expressed in formula (2) below.

[Math. 2]

$$x_d = (\alpha_1 x_c - y_c - \alpha_2 x_a + y_a) / (\alpha_1 - \alpha_2)$$
$$y_d = \alpha_1 x_d - \alpha_1 x_c + y_c \qquad \cdots (2)$$

Thus, as expressed in formula (3) below, an internal ratio (m, n) at the point D of the line AB, that is, a division ratio at the point D can be obtained on the basis of the coordinates $(x_d, y_d)$ of the point D, the coordinates $(x_a, y_a)$ of the reference viewpoint A, and the coordinates $(x_b, y_b)$ of the reference viewpoint B.

[Math. 3]

$$m = \mathrm{sqrt}((x_a - x_d)^2 + (y_a - y_d)^2)$$
$$n = \mathrm{sqrt}((x_b - x_d)^2 + (y_b - y_d)^2) \qquad \cdots (3)$$

Likewise, a point E denotes an intersection point of a straight line passing through the listening position F and the reference viewpoint B and a line AC from the reference viewpoint A to the reference viewpoint C, and $(x_e, y_e)$ denotes coordinates indicating the position of the point E on the XY plane. In other words, the point E is an internally dividing point on the line AC (side AC).

In this case, regarding an X coordinate and a Y coordinate that indicate the position of any point on a line BF from the reference viewpoint B to the listening position F and an X coordinate and a Y coordinate that indicate the position of any point on the line AC, relationships are established as in formula (4) below.

[Math. 4]

$$\text{Line BF}: \quad Y = \alpha_3 X - \alpha_3 x_b + y_b, \text{ where } \alpha_3 = (y_b - y_f) / (x_b - x_f)$$
$$\text{Line AC}: \quad Y = \alpha_4 X - \alpha_4 x_a + y_a, \text{ where } \alpha_4 = (y_c - y_a) / (x_c - x_a) \quad \cdots (4)$$

Since the point E is the intersection point of the straight line passing through the reference viewpoint B and the listening position F and the line AC, the coordinates $(x_e, y_e)$ of the point E on the XY plane can be determined from formula (4). The coordinates $(x_e, y_e)$ are expressed in formula (5) below.

[Math. 5]

$$x_e = (\alpha_3 x_b - y_b - \alpha_4 x_a + y_a) / (\alpha_3 - \alpha_4)$$
$$y_e = \alpha_3 x_e - \alpha_3 x_b + y_b \qquad \cdots (5)$$

Thus, as expressed in formula (6) below, an internal ratio (k, 1) at the point E of the line AC, that is, a division ratio at the point E can be obtained on the basis of the coordinates $(x_e, y_e)$ of the point E, the coordinates $(x_a, y_a)$ of the reference viewpoint A, and the coordinates $(x_c, y_c)$ of the reference viewpoint C.

[Math. 6]

$$k = \mathrm{sqrt}((x_a - x_e)^2 + (y_a - y_e)^2)$$
$$l = \mathrm{sqrt}((x_c - x_e)^2 + (y_c - y_e)^2) \qquad \cdots (6)$$

Thereafter, the determined ratios of the two sides, specifically, the internal ratio (m, n) and the internal ratio (k, 1) are applied to an object-side triangular mesh as illustrated in Fig. 9, so that coordinates $(x_\varepsilon', y_\varepsilon')$ at the object position F' on the XY plane are determined.

Specifically, in this example, a point D' on a line A'B' connecting an object position A' and an object position B' corresponds to the point D.

Similarly, a point E' on a line A'C' connecting the object position A' and an object position C' corresponds to the point E.

Moreover, an object position F' at the intersection point of a straight line passing through the object position C' and the point D' and a straight line passing through the object position B' and the point E' corresponds to the listening position F.

In this case, it is assumed that the point D' of the line A'B' has the same internal ratio (m, n) as the point D. At this point, as expressed in formula (7) below, the coordinates $(x_d', y_d')$ of the point D' on the XY plane can be obtained on the basis of the internal ratio (m, n), the coordinates $(x_a', y_a')$ of the object position A', and the coordinates $(x_b', y_b')$ of the object position B'.

[Math. 7]

$$x_d' = (nx_a' + mx_b') / (m+n)$$
$$y_d' = (ny_a' + my_b') / (m+n) \qquad \cdots (7)$$

Moreover, it is assumed that the point E' of the line A'C' has the same internal ratio (k, 1) as the point E. At this point, as expressed in formula (8) below, the coordinates $(x_e', y_e')$ of the point E' on the XY plane can be obtained on the basis of the internal ratio (k, 1), the coordinates $(x_a', y_a')$ of the object position A', and the coordinates $(x_c', y_c')$ of the object position C'.

[Math. 8]

$$x_e' = (lx_a' + kx_c') / (k+l)$$
$$y_e' = (ly_a' + ky_c') / (k+l) \qquad \cdots (8)$$

Hence, regarding an X coordinate and a Y coordinate that indicate the position of any point on a line B'E' from the object position B' to the point E' and an X coordinate and a Y coordinate that indicate the position of any point on a line C'D' from the object position C' to the point D', relationships are established as in formula (9) below.

[Math. 9]

$$\text{Line B'E'}: \ Y = \alpha_5 X + y_b' - \alpha_5 x_b', \text{ where } \alpha_5 = (y_e' - y_b') / (x_e' - x_b')$$
$$\text{Line C'D'}: \ Y = \alpha_6 X + y_c' - \alpha_6 x_c', \text{ where } \alpha_6 = (y_d' - y_c') / (x_d' - x_c')$$

$$\cdots (9)$$

Since the target object position F' is the intersection point of the line B'E' and the line C'D', the coordinates $(x_\varepsilon', y_\varepsilon')$ of the object position F' can be obtained from the relationships of formula (9) according to formula (10) below.

[Math. 10]

$$x_f' = (-y_b' + \alpha_5 x_b' + y_c' - \alpha_6 x_c') / (\alpha_5 - \alpha_6)$$
$$y_f' = \alpha_6 x_f' + y_c' - \alpha_6 x_c' \qquad \cdots (10)$$

This processing obtains the coordinates $(x_\varepsilon', y_\varepsilon')$ of the object position F' on the XY plane.

Subsequently, the coordinates $(x_f', y_f', z_f')$ of the object position F' in the XYZ coordinate system are determined on the basis of the coordinates $(x_\varepsilon', y_\varepsilon')$ of the object position F' on the XY plane, the coordinates $(x_a', y_a', z_a')$ of the object position A', the coordinates $(x_b', y_b', z_b')$ of the object position B', and the coordinates $(x_c', y_c', z_c')$ of the object position C' in the XYZ coordinate system. In other words, a Z coordinate $z_f'$ of the object position F' in the XYZ coordinate system is determined.

For example, a triangle with the vertices at the object position A', the object position B', and the object position C' in the XYZ coordinate system (common absolute coordinate system) is determined on a three-dimensional space, that is, a three-dimensional plane A'B'C' including the object position A', the object position B', and the object position C' is determined. Furthermore, a point with an X coordinate and a Y coordinate of $(x_\varepsilon', y_\varepsilon')$ is determined on the three-dimensional plane A'B'C', and a z coordinate at the point is $z_f'$.

Specifically, a vector with the initial point at the object position A' and the final point at the object position B' in the XYZ coordinate system is denoted as a vector A'B' = $(x_{ab}', yab', Zab')$.

Similarly, a vector with the initial point at the object position A' and the final point at the object position C' in the XYZ coordinate system is denoted as a vector A'C' = $(x_{ac}', y_{ac}', z_{ac}')$.

The vector A'B' and the vector A'C' can be obtained on the basis of the coordinates $(x_a', y_a', z_a')$ of the object position A', the coordinates $(x_b', y_b', z_b')$ of the object position B', and the coordinates $(x_c', y_c', z_c')$ of the object position C'. In other words, the vector A'B' and the vector A'C' can be obtained by formula (11) below.

[Math. 11]

$$\text{Vector A'B'}: \quad (x_{ab}', y_{ab}', z_{ab}') = (x_b' - x_a', y_b' - y_a', z_b' - z_a')$$
$$\text{Vector A'C'}: \quad (x_{ac}', y_{ac}', z_{ac}') = (x_c' - x_a', y_c' - y_a', z_c' - z_a') \quad \cdots (11)$$

A normal vector (s, t, u) of the three-dimensional plane A'B'C' is the outer product of the vector A'B' and the vector A'C' and can be determined by formula (12) below.

[Math. 12]

$$(s, t, u) = (y_{ab}' z_{ac}' - z_{ab}' y_{ac}', \; z_{ab}' x_{ac}' - x_{ab}' z_{ac}', \; x_{ab}' y_{ac}' - y_{ab}' x_{ac}')$$
$$\cdots (12)$$

Hence, from the normal vector (s, t, u) and the coordinates $(x_a', y_a', z_a')$ of the object position A', a plane equation of the three-dimensional plane A'B'C' is determined as expressed in formula (13) below.

[Math. 13]

$$s(X - x_a') + t(Y - y_a') + u(Z - z_a') = 0 \qquad \cdots (13)$$

Since the X coordinate $x_f'$ and the Y coordinate $y_f'$ of the object position F' on the three-dimensional plane A'B'C' have been already determined, the substitution of the X coordinate $x_f'$ and the Y coordinate $y_f'$ into X and Y of the plane equation of formula (13) can determine the Z coordinate $z_f'$ as expressed in formula (14) below.

[Math. 14]

$$z_f' = (-s(x_f' - x_a') - t(y_f' - y_a'))/u + z_a' \qquad \cdots (14)$$

The calculation obtains the coordinates $(x_f', y_f', z_f')$ of the target object position F'. In the object position calculation unit 48, the object absolute-coordinate position information indicating the obtained coordinates $(x_f', y_f', z_f')$ of the object position F' is outputted.

Interpolation performed in the object position calculation unit 71 will be described below.

For example, as indicated in Fig. 10, the object polar-coordinate position information on the polar-coordinate base interpolation object is determined by interpolation at the listening position F surrounded by the three reference viewpoints: the reference viewpoint A, the reference viewpoint B, and the reference viewpoint C.

In Fig. 10, parts corresponding to those of Fig. 8 are denoted by the same reference characters (signs) and a description thereof is omitted as necessary.

In other words, also in the example of Fig. 10, the same calculation as in Fig. 8 determines the coordinates $(x_d, y_d)$ of the point D, the coordinates $(x_e, y_e)$ of the point E, the coordinates $(x_f, y_f)$ of the listening position F, an internal ratio (m, n), and an internal ratio (k, 1).

Moreover, the object polar-coordinate position information on the polar-coordinate base interpolation object at the reference viewpoint A, the reference viewpoint B, and the reference viewpoint C is denoted as (Az(a), El(a), Rad(a)), (Az(b), El(b), Rad(b)), and (Az(c), El(c), Rad(c)).

For example, Az(a), El(a), and Rad(a) are a horizontal angle, a vertical angle, and a radius that constitute polar coordinates.

In this case, from the object polar-coordinate position information (Az(a), El(a), Rad(a)) and (Az(b), El(b), Rad(b)) at the reference viewpoint A and the reference viewpoint B and the internal ratio (m, n), the object polar-coordinate position information (Az(d), El(d), Rad(d)) on the polar-coordinate base interpolation object at the point D is determined by formula (15) below.

[Math. 15]

$$Az(d) = (m*Az(b) + n*Az(a)) / (m+n)$$
$$El(d) = (m*El(b) + n*El(a)) / (m+n)$$
$$Rad(d) = (m*Rad(b) + n*Rad(a)) / (m+n) \qquad \cdots (15)$$

Furthermore, from the object polar-coordinate position information (Az(d), El(d), Rad(d)) at the point D, the object polar-coordinate position information (Az(c), El(c), Rad(c)) at the reference viewpoint C, the coordinates $(x_c, y_c)$ of the reference viewpoint C, the coordinates $(xa, y_d)$ of the point D, and the coordinates $(x_f, y_f)$ of the listening position F, the object polar-coordinate position information (Az(f), El(f), Rad(f)) on the polar-coordinate base interpolation object at the listening position F is determined by formula (16) below.
[Math. 16]

$$Az(f) = (o*Az(c) + p*Az(d)) / (o+p)$$
$$El(f) = (o*El(c) + p*El(d)) / (o+p)$$
$$Rad(f) = (o*Rad(c) + p*Rad(d)) / (o+p)$$
$$where$$
$$o = SQRT((x_d - x_f)^2 + (y_d - y_f)^2 + (z_d - z_f)^2)$$
$$p = SQRT((x_c - x_f)^2 + (y_c - y_f)^2 + (z_c - z_f)^2) \qquad \cdots (16)$$

As described above, in the object position calculation unit 71, interpolation is performed on the basis of the object polar-coordinate position information at the three reference viewpoints according to formula (16) while keeping polar coordinates, so that the object polar-coordinate position information on the polar-coordinate base interpolation object at the listening position is calculated.

The interpolation performed in the object position calculation unit 71 is not limited to the example described with reference to Fig. 10. The interpolation may be implemented by any kinds of processing, for example, interpolation using a vector operation or an operation using a neural network.

<Example of System Configuration Information>

Fig. 11 indicates an example of the bit stream format of the system configuration information when the absolute-coordinate base interpolation object, the polar-coordinate base fixed object, the polar-coordinate base interpolation object, and the absolute-coordinate base fixed object can be handled.

In the example of Fig. 11, "NumOfObjs" represents the number of objects constituting contents. In this case, the number of objects means the total number of the absolute-coordinate base interpolation objects, the polar-coordinate base fixed objects, the polar-coordinate base interpolation objects, and the absolute-coordinate base fixed objects.

Moreover, "NumfOfRefViewPoint" represents the number of reference viewpoints.

The system configuration information includes pieces of reference viewpoint information including reference viewpoint position information and listener orientation information, as many as the number of reference viewpoints "NumfOfRefViewPoint".

The reference viewpoint position information is the absolute coordinates of the common absolute coordinate system that indicates the position of the reference viewpoint. In this example, the reference viewpoint position information includes an X coordinate "RefViewX[i]", a Y coordinate "RefViewY[i]", and a Z coordinate "RefViewZ[i]" that represent the position of the reference viewpoint in the common absolute coordinate system.

The listener orientation information is a rotation angle (horizontal angle) of the face of the listener in the horizontal direction, the rotation angle indicating a desired orientation of the face of the listener at the reference viewpoint, that is, an assumed orientation of the face of the listener at the reference viewpoint.

In this example, a horizontal angle "RefYaw[i]" of the face of the listener is included as the listener orientation information. The listener orientation information may further include a vertical angle (pitch angle) indicating the orientation of the face of the listener in the vertical direction in addition to a horizontal angle (yaw angle) of the face of the listener.

The system configuration information further includes information "ObjectOverLapMode[i]" indicating a reproduction mode in which the listener and the positions of the objects overlap each other, that is, the listener (listening position) and the objects are located at the same position according to the number of objects "NumOfObjs". Furthermore, "ProhibitRadius" represents the normalized value of a distance from the object to the listener if a space is normalized

by 1.0.

"InpterporationMode" represents an interpolation mode permitted for the client 12. Moreover, "NonInterpolate-PolarObjFlag" is a flag indicating the presence or absence of the polar-coordinate base fixed object. Specifically, a value "1" of the flag "NonInterpolatePolarObjFlag" indicates the presence of the polar-coordinate base fixed object, whereas a value "0" indicates the absence of the polar-coordinate base fixed object.

If the value of the flag "NonInterpolatePolarObjFlag" is "1", "NumOfObjs_NIPO" representing the number of polar-coordinate base fixed objects is stored in the system configuration information.

"NonInterpolateCartesianObjFlag" is a flag indicating the presence or absence of the absolute-coordinate base fixed object. Specifically, a value "1" of the flag "NonInterpolateCartesianObjFlag" indicates the presence of the absolute-coordinate base fixed object, whereas a value "0" indicates the absence of the absolute-coordinate base fixed object.

If the value of the flag "NonInterpolateCartesianObjFlag" is "1", "NumOfObjs_NICO" representing the number of absolute-coordinate base fixed objects is stored in the system configuration information.

"InterpolatePolarObjFlag" is a flag indicating the presence or absence of the polar-coordinate base interpolation object. Specifically, a value "1" of the flag "InterpolatePolarObjFlag" indicates the presence of the polar-coordinate base interpolation object, whereas a value "0" indicates the absence of the polar-coordinate base interpolation object.

If the value of the flag "InterpolatePolarObjFlag" is "1", "NumOfObjs_IPO" representing the number of polar-coordinate base interpolation objects is stored in the system configuration information.

"NumOfAncBytes" represents the size of an extended information region and "AncByteData[i]" represents extended-region byte data.

For example, the system configuration information configured as in Fig. 11 is transmitted from the server 11 to the client 12.

<Example of Bit Stream Format>

Fig. 12 indicates an example of the bit stream format in batch transmission of information on the positions of the objects, that is, the object polar-coordinate encoded data or the object absolute-coordinate encoded data on the condition that the positions of the objects do not change with time, that is, the objects do not move.

In this example, "fva_structure_info_polar()" represents the system configuration information. The system configuration information is not always supposed to be included when being separately transmitted.

In a bit stream, pieces of metadata "object_metadata()" on the absolute-coordinate base interpolation objects at the reference points are included as many as the number of reference viewpoints "NumfOfRefViewPoint".

The metadata "object_metadata()" includes the object polar-coordinate position information on the absolute-coordinate base interpolation object, more specifically, the object polar-coordinate encoded data or gain information (gain amount) on the absolute-coordinate base interpolation object.

Since the information is particularly transmitted by batch in this example, the metadata "object_metadata()" on the absolute-coordinate base interpolation objects is stored for all the reference viewpoints.

If the value of a flag "NonInterpolatePolarObjFlag" included in the system configuration information is "1", metadata "object_metadata_nonintpPolar()" on the polar-coordinate base fixed objects is stored in the bit stream.

Likewise, if the value of the flag "NonInterpolateCartesianObjFlag" included in the system configuration information is "1", metadata "object_metadata_nonintpCarte()" on the absolute-coordinate base fixed objects is stored in the bit stream.

Furthermore, if the value of a flag "InterpolatePolarObjFlag" included in the system configuration information is "1", metadata "object_metadata_intpPolar()" on the polar-coordinate base interpolation objects is stored in the bit stream.

In this example, as in the case of the absolute-coordinate base interpolation object, pieces of the metadata "object_metadata_intpPolar()" on the polar-coordinate base interpolation objects at the reference points are stored as many as the number of reference viewpoints "NumfOfRefViewPoint".

In the example of Fig. 12, it is assumed that the positions of the objects do not change with time.

Fig. 13 indicates an example of the bit stream format when the object polar-coordinate encoded data or the object absolute-coordinate encoded data on the objects is transmitted for each frame of audio data on the objects so as to correspond to a change of the position of each object with time.

In Fig. 13, "fva_structure_info_polar_present" represents a configuration information presence flag indicating the presence or absence of the system configuration information in the bit stream. A value "1" of the configuration information presence flag particularly indicates that the system configuration information is included (stored). In contrast, a value "0" of the configuration information presence flag indicates that the system configuration information is not included.

If the value of the configuration information presence flag "fva_structure_info_polar_present" is "1", the system configuration information "fva_structure_info_polar()" is included in the bit stream.

Also in the example of Fig. 13, the system configuration information is not always supposed to be included. The system configuration information may be transmitted at regular or irregular intervals. In other words, the system configuration information may be transmitted for one frame without being transmitted for another frame.

Since the information is transmitted for each frame in this example, metadata "object_metadata()" on the absolute-coordinate base interpolation objects is stored only for three reference viewpoints indicated by the viewpoint selection information received (acquired) from the client 12.

Moreover, as in the example of Fig. 12, if the value of a flag "NonInterpolatePolarObjFlag" included in the system configuration information is "1", metadata "object_metadata_nonintpPolarO" on the polar-coordinate base fixed objects is stored in the bit stream.

If the value of a flag "NonInterpolateCartesianObjFlag" included in the system configuration information is "1", metadata "object_metadata_nonintpCarte()" on the absolute-coordinate base fixed objects is stored in the bit stream.

Furthermore, if the value of a flag "InterpolatePolarObjFlag" included in the system configuration information is "1", metadata "object_metadata_intpPolar()" on the polar-coordinate base interpolation objects is stored in the bit stream only for three reference viewpoints indicated by the viewpoint selection information.

Referring to Figs. 14 to 16, examples of metadata on the polar-coordinate base fixed objects, metadata on the polar-coordinate base interpolation objects, and metadata on the absolute-coordinate base fixed objects will be described below.

Fig. 14 indicates an example of the bit stream format of the metadata "object_metadata_nonintpPolarO" on the polar-coordinate base fixed objects indicated in Figs. 12 and 13.

In this example, the object polar-coordinate position information (object polar-coordinate encoded data) and the gain amount (gain information) of the polar-coordinate base fixed objects are stored according to the number of polar-coordinate base fixed objects "NumOfObjs_NIPO" included in the system configuration information.

Specifically, "PosAzi[i]", "PosEle[i]", and "PosRad[i]" represent a horizontal angle, a vertical angle, and a radius that constitute the object polar-coordinate position information on the polar-coordinate base fixed object. Moreover, "Gain[i]" represents a gain amount for a gain adjustment to audio data on the polar-coordinate base fixed object, more specifically, encoded gain information obtained by encoding the gain information.

Fig. 15 indicates an example of the bit stream format of the metadata "object_metadata_intpPolar()" on the polar-coordinate base interpolation objects indicated in Figs. 12 and 13.

In this example, the object polar-coordinate position information (object polar-coordinate encoded data) and the gain amount (gain information) of the polar-coordinate base interpolation objects are stored according to the number of polar-coordinate base interpolation objects "NumOfObjs_IPO" included in the system configuration information.

Specifically, "PosAzi[i]", "PosEle[i]", and "PosRad[i]" represent a horizontal angle, a vertical angle, and a radius that constitute the object polar-coordinate position information on the polar-coordinate base interpolation object. Moreover, "Gain[i]" represents a gain amount for a gain adjustment to audio data on the polar-coordinate base interpolation object, more specifically, encoded gain information.

Fig. 16 indicates an example of the bit stream format of the metadata "object_metadata_nonintpCarte()" on the absolute-coordinate base fixed objects indicated in Figs. 12 and 13.

In this example, the object absolute-coordinate position information (object absolute-coordinate encoded data) and the gain amount (gain information) of the absolute-coordinate base fixed objects are stored according to the number of absolute-coordinate base fixed objects "NumOfObjs_NICO" included in the system configuration information.

Specifically, "PosX[i]", "PosY[i]", and "PosZ[i]" represent an X coordinate, a Y coordinate, and a Z coordinate of the common absolute coordinate system (XYZ coordinate system), the X, Y, and Z coordinates constituting the object absolute-coordinate position information on the absolute-coordinate base fixed object. Moreover, "Gain[i]" represents a gain amount for a gain adjustment to audio data on the absolute-coordinate base fixed object, more specifically, encoded gain information.

<Configuration Example of Content Reproducing System>

A more specific embodiment of the content reproducing system to which the present technique is applied will be described below.

Fig. 17 illustrates a configuration example of the content reproducing system to which the present technique is applied. In Fig. 17, parts corresponding to those of Fig. 4 are denoted by the same reference signs and a description thereof is omitted as necessary.

The content reproducing system in Fig. 17 includes the server 11 that distributes contents and the client 12 that receives contents distributed from the server 11.

The server 11 includes a configuration information recording unit 101, the configuration information transmission unit 21, a recording unit 102, the encoded data transmission unit 22, and a transmission buffer 103.

The configuration information recording unit 101 records, for example, the system configuration information prepared as indicated in Fig. 11 and supplies the recorded system configuration information to the configuration information transmission unit 21. The recording unit 102 may partly serve as the configuration information recording unit 101.

The recording unit 102 records, for example, encoded audio data obtained by encoding audio data on the objects, the object polar-coordinate encoded data, the object absolute-coordinate encoded data, and the encoded gain information on each object at each reference viewpoint. The data and information constitute the contents.

The recording unit 102 supplies, for example, the recorded encoded audio data, the recorded object polar-coordinate encoded data, the recorded object absolute-coordinate encoded data, and the recorded encoded gain information to the encoded data transmission unit 22 in response to a request or the like.

The transmission buffer 103 temporarily holds, for example, the encoded audio data, the object polar-coordinate encoded data, the object absolute-coordinate encoded data, and the encoded gain information that are supplied from the encoded data transmission unit 22.

The client 12 includes the listener-position information acquisition unit 41, the viewpoint selection unit 42, a communication unit 111, the decoding unit 45, a position calculation unit 112, and a rendering unit 113.

The communication unit 111 corresponds to the configuration information acquisition unit 43 and the encoded data acquisition unit 44 in, for example, Fig. 2 and transmits and receives various kinds of data through communications with the server 11.

For example, the communication unit 111 transmits the viewpoint selection information, which is supplied from the viewpoint selection unit 42, to the server 11 and receives the system configuration information and the bit stream that are transmitted from the server 11. In other words, the communication unit 111 acts as a reference-viewpoint information acquisition unit that acquires, from the server 11, the system configuration information, the object polar-coordinate encoded data, the object absolute-coordinate encoded data, and the encoded gain information that are included in the bit stream.

The position calculation unit 112 generates the polar-coordinate position information on the positions of all kinds of objects on the basis of the object polar-coordinate position information and the object absolute-coordinate position information that are supplied from the decoding unit 45 and the system configuration information supplied from the communication unit 111, and supplies the polar-coordinate position information to the rendering unit 113.

Moreover, the position calculation unit 112 performs a gain adjustment to audio data on all kinds of objects and supplies, to the rendering unit 113, the audio data having been subjected to the gain adjustment, the audio data being supplied from the decoding unit 45.

The position calculation unit 112 includes the coordinate transformation unit 46, the coordinate-axis transformation unit 47, the object position calculation unit 48, the polar-coordinate transformation unit 49, and the object position calculation unit 71.

The rendering unit 113 performs, for example, rendering such as VBAP on the basis of the polar-coordinate position information and the audio data that are supplied from the polar-coordinate transformation unit 49, the object position calculation unit 71, and the decoding unit 45, generates reproduction audio data for reproducing a sound of contents, and outputs the audio data.

<Explanation of Provision>

The operations of the server 11 and the client 12 in Fig. 17 will be described below.

For example, in response to a request to set up a network session from the client 12 after initialization, the server 11 performs processing for setting up the network session with the client 12.

Thereafter, the server 11 receives information on the start of the session from the client 12. In response to a request to transmit the system configuration information from the client 12, the server 11 starts provision, that is, processing for providing contents.

Referring to the flowchart of Fig. 18, the provision by the server 11 will be described below.

In step S11, the configuration information transmission unit 21 reads system configuration information on requested contents from the configuration information recording unit 101 and transmits the read system configuration information to the client 12.

For example, the system configuration information is transmitted to the client 12 via a network or the like immediately after a session is set up, that is, immediately after connection between the server 11 and the client 12 is established and before encoded audio data or the like is transmitted.

When the system configuration information is transmitted, viewpoint selection information on three reference viewpoints corresponding to the position of the listener is transmitted from the client 12.

In step S12, the configuration information transmission unit 21 receives the viewpoint selection information transmitted from the client 12 and supplies the viewpoint selection information and the system configuration information to the encoded data transmission unit 22.

In step S13, the encoded data transmission unit 22 loads data on the absolute-coordinate base interpolation object constituting contents, into the transmission buffer 103 on the basis of the viewpoint selection information and the system configuration information that are supplied from the configuration information transmission unit 21.

Specifically, regarding three reference viewpoints indicated by the viewpoint selection information, the encoded data transmission unit 22 reads object polar-coordinate encoded data and encoded gain information from the recording unit 102 for each absolute-coordinate base interpolation object, supplies the data and information to the transmission buffer 103, and causes the transmission buffer 103 to hold the data and information. The encoded data transmission unit 22 also reads encoded audio data on each absolute-coordinate base interpolation object from the recording unit 102, supplies the data to the transmission buffer 103, and causes the transmission buffer 103 to hold the data.

In step S14, the encoded data transmission unit 22 determines the presence or absence of a polar-coordinate base fixed object as an object constituting the contents, on the basis of the system configuration information. In this case, if the value of the flag "NonInterpolatePolarObjFlag" included in the system configuration information is "1", it is determined that the polar-coordinate base fixed object is present.

If it is determined that the polar-coordinate base fixed object is present in step S14, the encoded data transmission unit 22 in step S15 loads data on the polar-coordinate base fixed object constituting the contents, into the transmission buffer 103 on the basis of the system configuration information.

Specifically, the encoded data transmission unit 22 reads, from the recording unit 102, object polar-coordinate encoded data, encoded gain information, and encoded audio data on each polar-coordinate base fixed object constituting the contents, supplies the data and information to the transmission buffer 103, and causes the transmission buffer 103 to hold the data and information.

After the processing of step S15, the process advances to step S16.

If it is determined in step S14 that the polar-coordinate base fixed object is absent, the processing of step S15 is not performed. The process then advances to step S16.

In step S16, the encoded data transmission unit 22 determines the presence or absence of an absolute-coordinate base fixed object as an object constituting the contents, on the basis of the system configuration information. In this case, if the value of the flag "NonInterpolateCartesianObjFlag" included in the system configuration information is "1", it is determined that the absolute-coordinate base fixed object is present.

If it is determined that the absolute-coordinate base fixed object is present in step S16, the encoded data transmission unit 22 in step S17 loads data on the absolute-coordinate base fixed object constituting the contents, into the transmission buffer 103 on the basis of the system configuration information.

Specifically, the encoded data transmission unit 22 reads, from the recording unit 102, object absolute-coordinate encoded data, encoded gain information, and encoded audio data on each absolute-coordinate base fixed object constituting the contents, supplies the data and information to the transmission buffer 103, and causes the transmission buffer 103 to hold the data and information.

After the processing of step S17, the process advances to step S18.

If it is determined in step S16 that the absolute-coordinate base fixed object is absent, the processing of step S17 is not performed. The process then advances to step S18.

In step S18, the encoded data transmission unit 22 determines the presence or absence of a polar-coordinate base interpolation object as an object constituting the contents, on the basis of the system configuration information. In this case, if the value of the flag "InterpolatePolarObjFlag" included in the system configuration information is "1", it is determined that the polar-coordinate base interpolation object is present.

If it is determined in step S18 that the polar-coordinate base interpolation object is present, the process advances to step S19.

In step S19, the encoded data transmission unit 22 loads data on the polar-coordinate base interpolation object constituting the contents, into the transmission buffer 103 on the basis of the viewpoint selection information and the system configuration information.

Specifically, regarding three reference viewpoints indicated by the viewpoint selection information, the encoded data transmission unit 22 reads object polar-coordinate encoded data and encoded gain information from the recording unit 102 for each polar-coordinate base interpolation object, supplies the data and information to the transmission buffer 103, and causes the transmission buffer 103 to hold the data and information. The encoded data transmission unit 22 also reads encoded audio data on each polar-coordinate base interpolation object from the recording unit 102, supplies the data to the transmission buffer 103, and causes the transmission buffer 103 to hold the data.

After the processing of step S19, the process advances to step S20.

If it is determined in step S18 that the polar-coordinate base interpolation object is absent, the processing of step S19 is not performed. The process then advances to step S20.

In step S20, the encoded data transmission unit 22 multiplexes the data on the objects to generate a bit stream, the data being loaded into the transmission buffer 103 in the processing of steps S13 to S19. In this case, the system configuration information may be also multiplexed. This generates a bit stream in the format of, for example, Fig. 13.

In step S21, the encoded data transmission unit 22 transmits the generated bit stream to the client 12. This completes the distribution of the contents to the client 12.

In step S22, the encoded data transmission unit 22 determines whether to terminate the processing.

For example, in the case of a request to stop the transmission of contents from the client 12 or at the completion of the transmission of all the pieces of data on contents, it is determined that the processing is to be terminated.

In step S22, if it is determined that the processing is not to be terminated, the process returns to step S12 to repeat the foregoing processing.

If it is determined in step S22 that the processing is to be terminated, the units of the server 11 stop performing processing, thereby terminating the provision. For example, at the completion of the transmission of all the pieces of data on contents, the server 11 transmits information on the completion of the data transmission to the client 12 and terminates the provision.

As described above, the server 11 generates a bit stream including data on the objects constituting the contents, that is, necessary kinds of objects from among data on the four kinds of objects, and transmits the bit stream to the client 12. This can reproduce contents on the basis of the intention of a contents producer.

<Explanation of Generation of Reproduction Audio Data>

Moreover, the client 12 requests the server 11 to set up a network session after initialization. When receiving a response from the server 11, the client 12 transmits a request to transmit the system configuration information through the communication unit 111.

When the system configuration information is transmitted from the server 11 in response to a transmission request, the client 12 starts generating the reproduction audio data.

Referring to the flowchart of Fig. 19, the generation of the reproduction audio data by the client 12 will be described below.

In step S51, the communication unit 111 receives the system configuration information transmitted from the server 11 and supplies the information to the viewpoint selection unit 42, the coordinate-axis transformation unit 47, the object position calculation unit 48, and the object position calculation unit 71. In this case, the system configuration information may be decoded by the decoding unit 45 as necessary.

In step S52, the listener-position information acquisition unit 41 acquires the listener position information in response to a listener's operation or the like and supplies the information to the viewpoint selection unit 42, the object position calculation unit 48, the object position calculation unit 71, and the polar-coordinate transformation unit 49.

In step S53, the viewpoint selection unit 42 selects three reference viewpoints on the basis of the system configuration information supplied from the communication unit 111 and the listener position information supplied from the listener-position information acquisition unit 41 and supplies the viewpoint selection information on the selection result to the communication unit 111.

For example, in step S53, three reference viewpoints surrounding the listening position indicated by the listener position information are selected from a plurality of reference viewpoints indicated by the system configuration information.

Moreover, the communication unit 111 requests the start of the transmission of a bit stream from the server 11.

In step S54, the communication unit 111 transmits, to the server 11, the viewpoint selection information supplied from the viewpoint selection unit 42.

In response to the transmission, the bit stream generated in step S20 of Fig. 18 is transmitted from the server 11.

In step S55, the communication unit 111 receives the bit stream transmitted from the server 11 and supplies the bit stream to the decoding unit 45.

In step S56, the client 12 generates the polar-coordinate position information for each object.

Referring to the flowchart of Fig. 20, the generation of the polar-coordinate position information in step S56 will be described below.

In step S81, the decoding unit 45 extracts data on the absolute-coordinate base interpolation object from the bit stream supplied from the communication unit 111 and decodes the data.

The decoding unit 45 supplies the decoded object polar-coordinate position information on the absolute-coordinate base interpolation object to the coordinate transformation unit 46 and supplies decoded gain information on the absolute-coordinate base interpolation object to the object position calculation unit 48.

Moreover, the decoding unit 45 supplies decoded audio data on the absolute-coordinate base interpolation object to the polar-coordinate transformation unit 49.

In step S82, the coordinate transformation unit 46 performs coordinate transformation on the supplied object polar-coordinate position information on the absolute-coordinate base interpolation object from the decoding unit 45 and supplies the obtained object absolute-coordinate position information to the coordinate-axis transformation unit 47.

This obtains the object absolute-coordinate position information indicating the position of the absolute-coordinate base interpolation object in the absolute coordinate system with the origin located at the position of the reference viewpoint.

In step S83, the coordinate-axis transformation unit 47 performs coordinate-axis transformation on the object absolute-coordinate position information supplied from the coordinate transformation unit 46, on the basis of the system configuration information supplied from the communication unit 111.

The coordinate-axis transformation unit 47 performs coordinate-axis transformation on the object absolute-coordinate position information on the absolute-coordinate base interpolation object for each reference viewpoint and supplies the obtained object absolute-coordinate position information on the position of the absolute-coordinate base interpolation object in the common absolute coordinate system to the object position calculation unit 48. In the coordinate-axis transformation, the reference viewpoint information on the reference viewpoints included in the system configuration information, that is, the reference viewpoint position information and the listener orientation information are used.

In step S84, the object position calculation unit 48 performs interpolation on the basis of the system configuration information supplied from the communication unit 111, the listener position information supplied from the listener-position information acquisition unit 41, the object absolute-coordinate position information supplied from the coordinate-axis transformation unit 47, and the gain information supplied from the decoding unit 45.

For example, the object position calculation unit 48 performs the same calculations as the foregoing formulas (1) to (6) on the basis of the reference viewpoint position information included in the system configuration information and the listener position information and determines an internal ratio (m, n) and an internal ratio (k, 1).

The object position calculation unit 48 then performs the same calculations as the foregoing formulas (7) to (14) on the basis of the determined internal ratios (m, n) and (k, 1) and the object absolute-coordinate position information on the reference viewpoints, so that the final object absolute-coordinate position information on the absolute-coordinate base interpolation object is obtained by interpolation.

The object position calculation unit 48 also performs interpolation on the gain information as on the object absolute-coordinate position information and determines final gain information on the absolute-coordinate base interpolation object.

The object position calculation unit 48 supplies the interpolated final object absolute-coordinate position information on the absolute-coordinate base interpolation object and the interpolated gain information to the polar-coordinate transformation unit 49.

In step S85, the polar-coordinate transformation unit 49 performs polar-coordinate transformation on the supplied object absolute-coordinate position information on the absolute-coordinate base interpolation object from the object position calculation unit 48 on the basis of the listener position information supplied from the listener-position information acquisition unit 41 and generates the polar-coordinate position information.

This obtains the polar-coordinate position information on polar coordinates indicating the relative position of the absolute-coordinate base interpolation object viewed from the listening position.

The polar-coordinate transformation unit 49 makes a gain adjustment to the supplied audio data on the absolute-coordinate base interpolation object from the decoding unit 45 on the basis of the supplied gain information on the absolute-coordinate base interpolation object from the object position calculation unit 48.

The polar-coordinate transformation unit 49 supplies the obtained polar-coordinate position information and audio data on the absolute-coordinate base interpolation object to the rendering unit 113.

In step S86, the decoding unit 45 determines whether the bit stream supplied from the communication unit 111 includes data on the polar-coordinate base fixed object.

For example, in step S86, if the data is included in the bit stream or optionally if the value of the flag "NonInterpolatePolarObjFlag" of the system configuration information supplied from the communication unit 111 is "1", it is determined that data on the polar-coordinate base fixed object is present.

If it is determined that data on the polar-coordinate base fixed object is present in step S86, the decoding unit 45 in step S87 extracts the data on the polar-coordinate base fixed object from the bit stream supplied from the communication unit 111 and decodes the data.

The decoding unit 45 properly makes a gain adjustment to the decoded audio data on the polar-coordinate base fixed object on the basis of the decoded gain information on the polar-coordinate base fixed object.

Moreover, the decoding unit 45 supplies, to the rendering unit 113, the decoded object polar-coordinate position information on the polar-coordinate base fixed object and the gain-adjusted audio data on the polar-coordinate base fixed object. In this case, the object polar-coordinate position information on the polar-coordinate base fixed object is supplied as the polar-coordinate position information on the polar-coordinate base fixed object to the rendering unit 113 without being transformed.

After the processing of step S87, the process advances to step S88.

If it is determined in step S86 that the polar-coordinate base fixed object is absent, the process advances to step S88.

In step S88, the decoding unit 45 determines whether the bit stream supplied from the communication unit 111 includes data on the absolute-coordinate base fixed object.

For example, in step S88, if the data is included in the bit stream or optionally if the value of the flag "NonInterpolateCartesianObjFlag" of the system configuration information supplied from the communication unit 111 is "1", it is determined that data on the absolute-coordinate base fixed object is present.

If it is determined that data on the absolute-coordinate base fixed object is present in step S88, the decoding unit 45 in step S89 extracts the data on the absolute-coordinate base fixed object from the bit stream supplied from the communication unit 111 and decodes the data.

The decoding unit 45 supplies the decoded object absolute-coordinate position information on the absolute-coordinate base fixed object, the gain information, and the audio data to the polar-coordinate transformation unit 49.

In step S90, the polar-coordinate transformation unit 49 performs polar-coordinate transformation on the supplied object absolute-coordinate position information on the absolute-coordinate base fixed object from the decoding unit 45 on the basis of the listener position information supplied from the listener-position information acquisition unit 41 and generates the polar-coordinate position information.

This obtains the polar-coordinate position information on polar coordinates indicating the relative position of the absolute-coordinate base fixed object viewed from the listener (the listening position).

The polar-coordinate transformation unit 49 makes a gain adjustment to the supplied audio data on the absolute-coordinate base fixed object from the decoding unit 45 on the basis of the supplied gain information on the absolute-coordinate base fixed object from the decoding unit 45.

The polar-coordinate transformation unit 49 supplies the obtained polar-coordinate position information and audio data on the absolute-coordinate base fixed object to the rendering unit 113.

After the processing of step S90, the process advances to step S91.

If it is determined in step S88 that the absolute-coordinate base fixed object is absent, the process advances to step S91.

In step S91, the decoding unit 45 determines whether the bit stream supplied from the communication unit 111 includes data on the polar-coordinate base interpolation object.

For example, in step S91, if the data is included in the bit stream or optionally if the value of the flag "InterpolatePolarObjFlag" of the system configuration information supplied from the communication unit 111 is "1", it is determined that data on the polar-coordinate base interpolation object is present.

If it is determined that data on the polar-coordinate base interpolation object is present in step S91, the decoding unit 45 in step S92 extracts the data on the polar-coordinate base interpolation object from the bit stream supplied from the communication unit 111 and decodes the data.

The decoding unit 45 supplies the decoded object polar-coordinate position information on the polar-coordinate base interpolation object, the gain information, and the audio data to the object position calculation unit 71.

In step S93, the object position calculation unit 71 performs interpolation on the basis of the system configuration information supplied from the communication unit 111, the listener position information supplied from the listener-position information acquisition unit 41, the supplied object polar-coordinate position information on the polar-coordinate base interpolation object from the decoding unit 45, and the gain information supplied from the decoding unit 45.

For example, the object position calculation unit 71 performs the same calculations as the foregoing formulas (1) to (3) on the basis of the reference viewpoint position information included in the system configuration information and the listener position information and determines an internal ratio (m, n).

The object position calculation unit 71 then performs the same calculations as the foregoing formulas (15) and (16) on the basis of the determined internal ratio (m, n), the reference viewpoint position information, the object polar-coordinate position information on the polar-coordinate base interpolation object at each reference viewpoint, and the listener position information, so that the polar-coordinate position information on the polar-coordinate base interpolation object is determined by interpolation.

The object position calculation unit 71 also performs interpolation on the gain information as on the polar-coordinate position information and makes a gain adjustment to the audio data on the polar-coordinate base interpolation object on the basis of the obtained final gain information on the polar-coordinate base interpolation object.

The object position calculation unit 71 supplies the polar-coordinate position information and audio data on the polar-coordinate base interpolation object to the rendering unit 113, the position information and audio data being obtained by interpolation and a gain adjustment.

After the processing of step S93, the generation of the polar-coordinate position information is completed, and then the process advances to step S57 of Fig. 19.

If it is determined in step S91 that the polar-coordinate base interpolation object is absent, the generation of the polar-coordinate position information is completed without performing the processing of step S92 and step S93. The process then advances to step S57 of Fig. 19.

Referring to the description of the flowchart of Fig. 19 again, the rendering unit 113 in step S57 performs rendering such as VBAP on the basis of the supplied polar-coordinate position information and audio data on each object and outputs the obtained reproduction audio data.

In step S57, rendering is performed on the basis of the polar-coordinate position information and audio data on the absolute-coordinate base interpolation object and the absolute-coordinate base fixed object from the polar-coordinate transformation unit 49, the polar-coordinate position information and audio data on the polar-coordinate base fixed object from the decoding unit 45, and the polar-coordinate position information and audio data on the polar-coordinate base interpolation object from the object position calculation unit 71.

For example, through a speaker in the subsequent stage of the rendering unit 113, a sound of contents is reproduced on the basis of the reproduction audio data.

In step S58, the client 12 determines whether to terminate the current processing. For example, in step S58, in response to an instruction to stop the reproduction of contents from the listener or at the reproduction of all the pieces of received data on contents, it is determined that the processing is to be terminated.

If it is determined in step S58 that the processing is not to be terminated, the process returns to step S52 to repeat the foregoing processing.

If it is determined in step S58 that the processing is to be terminated, the client 12 finishes the session with the server 11 and stops the processing performed in the units, so that the generation of the reproduction audio data is terminated.

As described above, the client 12 performs proper processing on all kinds of objects included in the received bit stream and generates the reproduction audio data. This can reproduce the contents on the basis of the intention of a contents producer, allowing the listener to sufficiently feel attraction to the contents.

As described above, the present technique combines an object flexibly located according to the position of a listener and a listener-oriented object fixed regardless of the position of the listener and encodes data on all kinds of objects so as to efficiently transmit and reproduce the data.

This can represent an object position determined by interpolation at any position in an object layout that is designed by Audio Artistic Intent in a three-dimensional space according to the intention of a contents producer. The present technique can also achieve an object always fixed regardless of the orientation of the listener and an object disposed at an absolute position in a free viewpoint space.

Thus, the present technique can achieve applications such as a guide support system that depends upon, for example, the acoustic AR or the arrival direction of sound and achieve a world of contents reproduction in the form of Artistic Intent, in which objects are disposed at proper positions by interpolation, in a free viewpoint space including fixed background noise.

<Configuration Example of Computer>

The series of processing can be performed by hardware or software. If the series of processing is performed by software, a program constituting the software is installed on a computer. In this case, the computer includes, for example, a computer built in dedicated hardware and a general-purpose personal computer on which various programs are installed to be able to execute various functions.

Fig. 21 is a block diagram illustrating a hardware configuration example of a computer that executes a program to perform the series of processing.

In the computer, a central processing unit (CPU) 501, read-only memory (ROM) 502, and random access memory (RAM) 503 are connected to one another via a bus 504.

An input/output interface 505 is further connected to the bus 504. An input unit 506, an output unit 507, a recording unit 508, a communication unit 509, and a drive 510 are connected to the input/output interface 505.

The input unit 506 includes a keyboard, a mouse, a microphone, and an imaging element. The output unit 507 includes a display and a speaker. The recording unit 508 includes a hard disk and a nonvolatile memory. The communication unit 509 includes a network interface. The drive 510 drives a removable recording medium 511, e.g., a magnetic disk, an optical disc, a magneto-optical disk, or a semiconductor memory.

In the computer configured thus, the CPU 501 loads, for example, a program recorded in the recording unit 508 into the RAM 503 through the input/output interface 505 and the bus 504 and executes the program, so that the series of processing is performed.

The program to be executed by the computer (the CPU 501) can be provided in such a manner as to be recorded on, for example, the removable recording medium 511 serving as a packaged medium. The program can also be provided through a wired or wireless transmission medium, e.g., a local area network, the Internet, or digital satellite broadcasting.

In the computer, the program can be installed on the recording unit 508 through the input/output interface 505 by loading the removable recording medium 511 into the drive 510. Furthermore, the program can be received by the communication unit 509 through a wired or wireless transfer medium and installed on the recording unit 508. In addition, the program can be installed in advance on the ROM 502 or the recording unit 508.

Note that the program executed by a computer may be a program that performs processing chronologically in the order described in the present specification or may be a program that performs processing in parallel or at a necessary timing, e.g., a calling time.

Embodiments of the present technique are not limited to the foregoing embodiment and can be changed in various manners without departing from the gist of the present technique.

For example, the present technique may be configured as cloud computing in which one function is shared and cooperatively processed by a plurality of devices via a network.

In addition, the steps described in the flowchart can be executed by one device or a plurality of devices in a shared manner.

Furthermore, if one step includes a plurality of processes, the plurality of processes included in the one step can be executed by one device or a plurality of devices in a shared manner.

The present technique can also be configured as follows.

(1) An information processing device including: a listener-position information acquisition unit that acquires listener position information on the viewpoint of a listener;

a reference-viewpoint information acquisition unit that acquires position information on a first reference viewpoint, object position information on a first object at the first reference viewpoint, position information on a second reference viewpoint, object position information on the first object at the second reference viewpoint, and object position information on a second object; and

an object position calculation unit that calculates position information on the first object at the viewpoint of the listener on the basis of the listener position information, the position information on the first reference viewpoint, the object position information on the first object at the first reference viewpoint, the position information on the second reference viewpoint, and the object position information on the first object at the second reference viewpoint.

(2) The information processing device according to (1), wherein the first reference viewpoint and the second reference viewpoint are viewpoints set in advance by a contents producer.

(3) The information processing device according to (1) or (2), wherein the first reference viewpoint and the second reference viewpoint are viewpoints selected on the basis of the listener position information.

(4) The information processing device according to any one of (1) to (3), wherein the object position calculation unit calculates the position information on the first object at the viewpoint of the listener by interpolation.

(5) The information processing device according to (4), wherein the object position information on the first object at the first reference viewpoint is coordinate information indicating the relative position of the first object with respect to the first reference viewpoint, and

the object position information on the first object at the second reference viewpoint is coordinate information indicating the relative position of the first object with respect to the second reference viewpoint.

(6) The information processing device according to (5), wherein the object position information on the first object is information indicating a position represented by polar coordinates.

(7) The information processing device according to (6), wherein the object position calculation unit performs the interpolation on the basis of the polar-coordinate object position information on the first object.

(8) The information processing device according to any one of (4) to (6), wherein the object position calculation unit transforms the polar-coordinate object position information on the first object into object absolute-coordinate position information indicating the absolute position of the first object in a common absolute coordinate space, and performs the interpolation on the basis of the object absolute-coordinate position information represented by absolute coordinates.

(9) The information processing device according to (4), wherein for at least three reference viewpoints including the first reference viewpoint and the second reference viewpoint, the reference-viewpoint information acquisition unit acquires the position information on the reference viewpoints and the object position information on the first object at the reference viewpoints, and

the object position calculation unit performs the interpolation on the basis of the listener position information, the position information on three of the reference viewpoints, and the object position information on the first object at the three reference viewpoints.

(10) The information processing device according to any one of (1) to (9), wherein the object position information on the second object is coordinate information indicating the relative position of the second object with respect to the position of the listener.

(11) The information processing device according to any one of (1) to (9), wherein the object position information on the second object is coordinate information indicating the absolute position of the second object in the common absolute coordinate space, and

the object position calculation unit transforms the object position information on the second object into position information on the second object at the viewpoint of the listener.

(12) The information processing device according to any one of (1) to (11), wherein the object position calculation unit calculates position information on the first object at the viewpoint of the listener on the basis of the listener position information, the position information on the first reference viewpoint, the object position information on the first object at the first reference viewpoint, listener orientation information on the set orientation of the face of the listener at the first reference viewpoint, the position information on the second reference viewpoint, the object position information on the first object at the second reference viewpoint, and the listener orientation information at the second reference viewpoint.

(13) The information processing device according to (12), wherein the reference-viewpoint information acquisition unit acquires configuration information including the position information and the listener orientation information on at least three reference viewpoints including the first reference viewpoint and the second reference viewpoint.

(14) The information processing device according to (13), wherein the configuration information includes information on the number of reference viewpoints and information on the number of first objects and second objects.

(15) An information processing method that causes an information processing device to:

acquire listener position information on the viewpoint of a listener;
acquire position information on a first reference viewpoint, object position information on a first object at the first reference viewpoint, position information on a second reference viewpoint, object position information on the first object at the second reference viewpoint, and object position information on a second object; and
calculate position information on the first object at the viewpoint of the listener on the basis of the listener position information, the position information on the first reference viewpoint, the object position information on the first object at the first reference viewpoint, the position information on the second reference viewpoint, and the object position information on the first object at the second reference viewpoint.

(16) A program that causes a computer to: acquire listener position information on the viewpoint of a listener;

acquire position information on a first reference viewpoint, object position information on a first object at the first reference viewpoint, position information on a second reference viewpoint, object position information on the first object at the second reference viewpoint, and object position information on a second object; and
calculate position information on the first object at the viewpoint of the listener on the basis of the listener position information, the position information on the first reference viewpoint, the object position information on the first object at the first reference viewpoint, the position information on the second reference viewpoint, and the object position information on the first object at the second reference viewpoint.

[Reference Signs List]

| | |
|---|---|
| 11 | Server |
| 12 | Client |
| 21 | Configuration information transmission unit |
| 22 | Encoded data transmission unit |
| 41 | Listener-position information acquisition unit |
| 42 | Viewpoint selection unit |
| 45 | Decoding unit |
| 48 | Object position calculation unit |
| 71 | Object position calculation unit |
| 111 | Communication unit |
| 112 | Position calculation unit |
| 113 | Rendering unit |

**Claims**

**1.** An information processing device comprising: a listener-position information acquisition unit that acquires listener position information on a viewpoint of a listener;

a reference-viewpoint information acquisition unit that acquires position information on a first reference viewpoint, object position information on a first object at the first reference viewpoint, position information on a second reference viewpoint, object position information on the first object at the second reference viewpoint, and object position information on a second object; and

an object position calculation unit that calculates position information on the first object at the viewpoint of the listener on a basis of the listener position information, the position information on the first reference viewpoint, the object position information on the first object at the first reference viewpoint, the position information on the second reference viewpoint, and the object position information on the first object at the second reference viewpoint.

2. The information processing device according to claim 1, wherein the first reference viewpoint and the second reference viewpoint are viewpoints set in advance by a contents producer.

3. The information processing device according to claim 1, wherein the first reference viewpoint and the second reference viewpoint are viewpoints selected on a basis of the listener position information.

4. The information processing device according to claim 1, wherein the object position calculation unit calculates the position information on the first object at the viewpoint of the listener by interpolation.

5. The information processing device according to claim 4, wherein the object position information on the first object at the first reference viewpoint is coordinate information indicating a relative position of the first object with respect to the first reference viewpoint, and

the object position information on the first object at the second reference viewpoint is coordinate information indicating a relative position of the first object with respect to the second reference viewpoint.

6. The information processing device according to claim 5, wherein the object position information on the first object is information indicating a position represented by polar coordinates.

7. The information processing device according to claim 6, wherein the object position calculation unit performs the interpolation on the basis of the polar-coordinate object position information on the first object.

8. The information processing device according to claim 4, wherein the object position calculation unit transforms the polar-coordinate object position information on the first object into object absolute-coordinate position information indicating an absolute position of the first object in a common absolute coordinate space, and performs the interpolation on a basis of the object absolute-coordinate position information represented by absolute coordinates.

9. The information processing device according to claim 4, wherein for at least three reference viewpoints including the first reference viewpoint and the second reference viewpoint, the reference-viewpoint information acquisition unit acquires the position information on the reference viewpoints and the object position information on the first object at the reference viewpoints, and

the object position calculation unit performs the interpolation on a basis of the listener position information, the position information on three of the reference viewpoints, and the object position information on the first object at the three reference viewpoints.

10. The information processing device according to claim 1, wherein the object position information on the second object is coordinate information indicating a relative position of the second object with respect to the position of the listener.

11. The information processing device according to claim 1, wherein the object position information on the second object is coordinate information indicating an absolute position of the second object in a common absolute coordinate space, and

the object position calculation unit transforms the object position information on the second object into position information on the second object at the viewpoint of the listener.

12. The information processing device according to claim 1, wherein the object position calculation unit calculates position information on the first object at the viewpoint of the listener on a basis of the listener position information, the position information on the first reference viewpoint, the object position information on the first object at the first reference viewpoint, listener orientation information on a set orientation of a face of the listener at the first reference viewpoint, the position information on the second reference viewpoint, the object position information on the first object at the second reference viewpoint, and the listener orientation information at the second reference viewpoint.

**13.** The information processing device according to claim 12, wherein the reference-viewpoint information acquisition unit acquires configuration information including the position information and the listener orientation information on at least three reference viewpoints including the first reference viewpoint and the second reference viewpoint.

**14.** The information processing device according to claim 13, wherein the configuration information includes information on the number of reference viewpoints and information on the number of first objects and second objects.

**15.** An information processing method that causes an information processing device to:

acquire listener position information on a viewpoint of a listener;
acquire position information on a first reference viewpoint, object position information on a first object at the first reference viewpoint, position information on a second reference viewpoint, object position information on the first object at the second reference viewpoint, and object position information on a second object; and
calculate position information on the first object at the viewpoint of the listener on a basis of the listener position information, the position information on the first reference viewpoint, the object position information on the first object at the first reference viewpoint, the position information on the second reference viewpoint, and the object position information on the first object at the second reference viewpoint.

**16.** A program that causes a computer to: acquire listener position information on a viewpoint of a listener;

acquire position information on a first reference viewpoint, object position information on a first object at the first reference viewpoint, position information on a second reference viewpoint, object position information on the first object at the second reference viewpoint, and object position information on a second object; and
calculate position information on the first object at the viewpoint of the listener on a basis of the listener position information, the position information on the first reference viewpoint, the object position information on the first object at the first reference viewpoint, the position information on the second reference viewpoint, and the object position information on the first object at the second reference viewpoint.

Fig. 1

Fig. 2

Fig. 3

Fig. 4

EP 4 228 289 A1

SERVER

CLIENT

11

12

LISTENER POSITION INFORMATION ON COMMON ABSOLUTE COORDINATE SPACE

21

43

42

SYSTEM CONFIGURATION INFORMATION

CONFIGURATION INFORMATION TRANSMISSION UNIT

CONFIGURATION INFORMATION ACQUISITION UNIT

VIEWPOINT SELECTION UNIT

LISTENER-POSITION INFORMATION ACQUISITION UNIT

41

OBJECT POLAR-COORDINATE ENCODED DATA AT EACH REF VIEWPOINT

22

ENCODED DATA TRANSMISSION UNIT

ASSUMED COORDINATE POSITION AT EACH REF VIEWPOINT

OBJECT ABSOLUTE COORDINATE DATA PROJECTED TO COMMON ABSOLUTE COORDINATE SPACE

ABSOLUTE COORDINATE DATA ON INTERPOLATED OBJECTS

POLAR COORDINATE DATA ON INTERPOLATED OBJECTS

POLAR-COORDINATE SYSTEM EDITOR

REF VIEWPOINT A

REF VIEWPOINT B

REF VIEWPOINT C

ENCODED DATA ACQUISITION UNIT

DECODING UNIT

COORDINATE TRANSFORMATION UNIT

COORDINATE-AXIS TRANSFORMATION UNIT

OBJECT POSITION CALCULATION UNIT

POLAR-COORDINATE TRANSFORMATION UNIT

44

45

46

47

48

49

OBJECT POSITION CALCULATION UNIT

71

POLAR COORDINATE DATA ON POLAR-COORDINATE BASE INTERPOLATION OBJECT

Fig. 5

Fig. 6

EP 4 228 289 A1

Fig. 7

VIEWPOINT SIDE

A $(x_a, y_a)$

F $(x_f, y_f)$

B $(x_b, y_b)$

C $(x_c, y_c)$

OBJECT SIDE

A' $(x_a', y_a')$

F' $(x_f', y_f')$

B' $(x_b', y_b')$

C' $(x_c', y_c')$

Fig. 8

Fig. 9

Fig. 10

VIEWPOINT SIDE

A $(x_a, y_a)$, Az(a), El(a), Rad(a)

$(x_e, y_e)$ E

$(x_d, y_d)$, Az(d), El(d), Rad(d) D

$(x_f, y_f)$ F

B $(x_b, y_b)$, Az(b), El(b), Rad(b)

C $(x_c, y_c)$, Az(c), El(c), Rad(c)

k  m  l  n

Fig. 11

EP 4 228 289 A1

| syntax | bit | Comment |
|---|---|---|
| fva_structure_info_polar(){ | | |
| NumOfObjs; | INT32 | THE NUMBER OF OBJECTS |
| NumOfRefViewPoint; | INT32 | THE NUMBER OF REFERENCE VIEWPOINTS |
| for(i = 0; i < NumOfRefViewPoint; i++){ | | |
| RefViewX[i]; | FLOAT32 | ASSUMED ABSOLUTE COORDINATE POSITION (X AXIS) AT REFERENCE VIEWPOINT FLOAT32 VALUE |
| RefViewY[i]; | FLOAT32 | ASSUMED ABSOLUTE COORDINATE POSITION (Y AXIS) AT REFERENCE VIEWPOINT FLOAT32 VALUE |
| RefViewZ[i]; | FLOAT32 | ASSUMED ABSOLUTE COORDINATE POSITION (Z AXIS) AT REFERENCE VIEWPOINT FLOAT32 VALUE |
| RefYaw[i]; | FLOAT32 | ASSUMED FACE ORIENTATION OF LISTENER AT EACH REFERENCE VIEWPOINT POSITION (YAW DIRECTION) |
| } | | |
| for(i = 0; i < NumOfObjs; i++){ | | |
| ObjectOverLapMode[i]; | INT32 | REPRODUCTION MODE IN WHICH LISTENER AND OBJECT OVERLAP EACH OTHER |
| if(ObjectOverLapMode[i] == 2){ | | |
| ProhibitRadius | FLOAT32 | NORMALIZED VALUE OF DISTANCE FROM OBJECT TO LISTENER IF SPACE IS NORMALIZED BY 1.0 |
| } | | |
| } | | |
| InterporationMode | INT32 (CHAR) | INTERPOLATION MODE PERMITTED FOR CLIENT (8-BIT BIT MASK) |
| NonInterpolatePolarObjFlag | INT32 | FLAG INDICATING PRESENCE OR ABSENCE OF POLAR-COORDINATE BASE FIXED OBJECT 0: ABSENT, 1: PRESENT |
| if(NonInterpolatePolarObjFlag == 1){ | | |
| NumOfObjs_NIPO; | INT32 | THE NUMBER OF POLAR-COORDINATE BASE FIXED OBJECTS |
| } | | |
| NonInterpolateCartesianObjFlag | INT32 | FLAG INDICATING PRESENCE OR ABSENCE OF ABSOLUTE-COORDINATE BASE FIXED OBJECT 0: ABSENT, 1: PRESENT |
| if(NonInterpolateCartesianObjFlag == 1){ | | |
| NumOfObjs_NICO; | | THE NUMBER OF ABSOLUTE-COORDINATE BASE FIXED OBJECTS |
| } | | |
| InterpolatePolarObjFlag | INT32 | FLAG INDICATING PRESENCE OR ABSENCE OF POLAR-COORDINATE BASE INTERPOLATION OBJECT 0: ABSENT, 1: PRESENT |
| if(InterpolatePolarObjFlag == 1){ | | |
| NumOfObjs_IPO; | | |
| } | | |
| NumOfAncBytes; | INT32 | SIZE OF EXTENDED INFORMATION REGION (MAX 255 BYTE) |
| for(i = 0; i < NumOfAncBytes; i++){ | | |
| AncByteData[i]; | INT32 (CHAR) | EXTENDED REGION BYTE DATA |
| } | | |
| } | | |

Fig. 12

| syntax | bit | Comment |
|---|---|---|
| object_metadata_fva_polar () { | | |
|     fva_structure_info_polar (); | | CONFIGURATION INFORMATION |
|     for (i = 0; i < NumfOfRefViewPoint; i++) { | | |
|       object_metadata (); | | TRANSMIT ABSOLUTE-COORDINATE BASE INTERPOLATION OBJECTS (AAI-COMPLIANT OBJECTS) OBJECT_METADATA() AS MANY AS REF VIEWPOINTS |
|     } | | |
|     if (NonInterpolatePolarObjFlag == 1) { | | |
|       object_metadata_nonintpPolar (); | | POLAR-COORDINATE BASE FIXED OBJECT |
|     } | | |
|     if (NonInterpolateCartesianObjFlag == 1) { | | |
|       object_metadata_nonintpCarte (); | | ABSOLUTE-COORDINATE BASE FIXED OBJECT |
|     } | | |
|     if (InterpolatePolarObjFlag == 1) { | | |
|       for (i = 0; i < NumfOfRefViewPoint; i++) { | | |
|         object_metadata_intpPolar (); | | TRANSMIT POLAR-COORDINATE BASE INTERPOLATION OBJECTS OBJECT_METADATA() AS MANY AS REF VIEWPOINTS |
|       } | | |
|     } | | |
| } | | |

Fig. 13

EP 4 228 289 A1

| syntax | bit | Comment |
|---|---|---|
| object_metadata_fva_polar () { | | |
| **fva_structure_info_polar_present** | **INT32** | CONFIGURATION INFORMATION PRESENCE FLAG |
| if(fva_structure_info_polar_present == 1) { | | |
| fva_structure_info_polar(): | | CONFIGURATION INFORMATION |
| } | | |
| for(i=0; i<3; i++) { | | |
| object_metadata(): | | TRANSMIT ABSOLUTE-COORDINATE BASE INTERPOLATION OBJECTS (AAI-COMPLIANT OBJECTS) OBJECT_METADATA() AS MANY AS REF VIEWPOINTS |
| } | | |
| if(NonInterpolatePolarObjFlag == 1) { | | |
| object_metadata_nonintpPolar(): | | POLAR-COORDINATE BASE FIXED OBJECT |
| } | | |
| if(NonInterpolateCartesianObjFlag == 1) { | | |
| object_metadata_nonintpCarte(): | | ABSOLUTE-COORDINATE BASE FIXED OBJECT |
| } | | |
| if(InterpolatePolarObjFlag == 1) { | | |
| for(i=0; i<3; i++) { | | |
| object_metadata_intpPolar (): | | TRANSMIT POLAR-COORDINATE BASE INTERPOLATION OBJECTS OBJECT_METADATA() AS MANY AS REF VIEWPOINTS |
| } | | |
| } | | |
| } | | |

Fig. 14

| syntax | bit | Comment |
|---|---|---|
| object_metadata_nonintpPolar () { | | |
| for (i = 0; i < NumOfObjs_NIPO; i++) { | | |
| PosAzi[i]; | Float32 | AZIMUTH: ANGLE IN HORIZONTAL DIRECTION |
| PosEle[i]; | Float32 | ELEVATION: ANGLE IN VERTICAL DIRECTION |
| PosRad[i]; | Float32 | RADIUS: RADIUS |
| Gain[i] | Float32 | GAIN: GAIN AMOUNT |
| } | | |
| } | | |

Fig. 15

EP 4 228 289 A1

| syntax | bit | Comment |
|---|---|---|
| object_metadata_intpPolar () { | | |
| for (i = 0; i < NumOfObjs_IPO; i++) { | | |
| PosAzi[i]; | Float32 | AZIMUTH: ANGLE IN HORIZONTAL DIRECTION |
| PosEle[i]; | Float32 | ELEVATION: ANGLE IN VERTICAL DIRECTION |
| PosRad[i]; | Float32 | RADIUS: RADIUS |
| Gain[i] | Float32 | GAIN: GAIN AMOUNT |
| } | | |
| } | | |

Fig. 16

| syntax | bit | Comment |
|---|---|---|
| object_metadata_nonintpCarte() { | | |
| for (i = 0; i < NumOfObjs_NICO; i++) { | | |
| PosX[i]; | Float32 | X-COORDINATE POSITION INFORMATION |
| PosY[i]; | Float32 | Y-COORDINATE POSITION INFORMATION |
| PosZ[i]; | Float32 | Z-COORDINATE POSITION INFORMATION |
| Gain[i] | Float32 | GAIN: GAIN AMOUNT |
| } | | |
| } | | |

Fig. 17

Fig. 18

START OF PROVISION

TRANSMIT SYSTEM CONFIGURATION INFORMATION — S11

RECEIVE VIEWPOINT SELECTION INFORMATION — S12

LOAD DATA ON ABSOLUTE-COORDINATE BASE INTERPOLATION OBJECT — S13

IS POLAR-COORDINATE BASE FIXED OBJECT PRESENT? — S14 — NO

YES

LOAD DATA ON POLAR-COORDINATE BASE FIXED OBJECT — S15

IS ABSOLUTE-COORDINATE BASE FIXED OBJECT PRESENT? — S16 — NO

YES

LOAD DATA ON ABSOLUTE-COORDINATE BASE FIXED OBJECT — S17

IS ABSOLUTE-COORDINATE BASE INTERPOLATION OBJECT PRESENT? — S18 — NO

YES

LOAD DATA ON ABSOLUTE-COORDINATE BASE INTERPOLATION OBJECT — S19

GENERATE BIT STREAM — S20

TRANSMIT BIT STREAM — S21

TO BE TERMINATED? — S22 — NO

YES

END

Fig. 19

```
        ( START GENERATING REPRODUCTION AUDIO DATA )
                              │
                              ▼
        ┌─────────────────────────────────────────┐ S51
        │  RECEIVE SYSTEM CONFIGURATION INFORMATION │
        └─────────────────────────────────────────┘
                              │
                              ▼
        ┌─────────────────────────────────────────┐ S52
        │    ACQUIRE LISTENER POSITION INFORMATION  │
        └─────────────────────────────────────────┘
                              │
                              ▼
        ┌─────────────────────────────────────────┐ S53
        │         SELECT REFERENCE VIEWPOINT        │
        └─────────────────────────────────────────┘
                              │
                              ▼
        ┌─────────────────────────────────────────┐ S54
        │  TRANSMIT VIEWPOINT SELECTION INFORMATION │
        └─────────────────────────────────────────┘
                              │
                              ▼
        ┌─────────────────────────────────────────┐ S55
        │             RECEIVE BIT STREAM            │
        └─────────────────────────────────────────┘
                              │
                              ▼
        ┌─────────────────────────────────────────┐ S56
        │   GENERATE POLAR-COORDINATE POSITION      │
        │              INFORMATION                  │
        └─────────────────────────────────────────┘
                              │
                              ▼
        ┌─────────────────────────────────────────┐ S57
        │             PERFORM RENDERING             │
        └─────────────────────────────────────────┘
                              │
                              ▼              S58
                  ◇───────────────────────◇
         NO      │    TO BE TERMINATED?    │
        ◄────────◇───────────────────────◇
                              │ YES
                              ▼
                          ( END )
```

Fig. 20

```
      ┌─────────────────────────────────────┐
      │   START GENERATING POLAR            │
      │ COORDINATE POSITION INFORMATION     │
      └─────────────────────────────────────┘
                      │
                      ▼
      ┌─────────────────────────────────────┐
      │ DECODE DATA ON ABSOLUTE-COORDINATE  │ S81
      │     BASE INTERPOLATION OBJECT       │
      └─────────────────────────────────────┘
                      │
                      ▼
      ┌─────────────────────────────────────┐
      │   PERFORM COORDINATE TRANSFORMATION │ S82
      └─────────────────────────────────────┘
                      │
                      ▼
      ┌─────────────────────────────────────┐
      │      PERFORM COORDINATE AXIS        │ S83
      │          TRANSFORMATION             │
      └─────────────────────────────────────┘
                      │
                      ▼
      ┌─────────────────────────────────────┐
      │        PERFORM INTERPOLATION        │ S84
      └─────────────────────────────────────┘
                      │
                      ▼
      ┌─────────────────────────────────────┐
      │ GENERATE POLAR-COORDINATE POSITION  │ S85
      │            INFORMATION              │
      └─────────────────────────────────────┘
                      │
                      ▼
                                           S86
              IS POLAR-COORDINATE
           BASE FIXED OBJECT PRESENT? ──── NO ──┐
                      │                         │
                      │ YES                     │
                      ▼                         │
      ┌─────────────────────────────────────┐  │
      │ DECODE DATA ON POLAR-COORDINATE     │S87│
      │         BASE FIXED OBJECT           │  │
      └─────────────────────────────────────┘  │
                      │◄────────────────────────┘
                      ▼
                                           S88
              IS ABSOLUTE-COORDINATE
           BASE FIXED OBJECT PRESENT? ──── NO ──┐
                      │                         │
                      │ YES                     │
                      ▼                         │
      ┌─────────────────────────────────────┐  │
      │ DECODE DATA ON ABSOLUTE-COORDINATE  │S89│
      │         BASE FIXED OBJECT           │  │
      └─────────────────────────────────────┘  │
                      │                         │
                      ▼                         │
      ┌─────────────────────────────────────┐  │
      │ GENERATE POLAR-COORDINATE POSITION  │S90│
      │            INFORMATION              │  │
      └─────────────────────────────────────┘  │
                      │◄────────────────────────┘
                      ▼
                                           S91
            IS POLAR-COORDINATE BASE
         INTERPOLATION OBJECT PRESENT? ── NO ──┐
                      │                        │
                      │ YES                    │
                      ▼                        │
      ┌─────────────────────────────────────┐ │
      │ DECODE DATA ON POLAR-COORDINATE     │S92│
      │     BASE INTERPOLATION OBJECT       │ │
      └─────────────────────────────────────┘ │
                      │                        │
                      ▼                        │
      ┌─────────────────────────────────────┐ │
      │        PERFORM INTERPOLATION        │S93│
      └─────────────────────────────────────┘ │
                      │◄───────────────────────┘
                      ▼
              ┌───────────────┐
              │    RETURN     │
              └───────────────┘
```

Fig. 21

501 CPU
502 ROM
503 RAM
504
505 INPUT/OUTPUT INTERFACE
506 INPUT UNIT
507 OUTPUT UNIT
508 RECORDING UNIT
509 COMMUNICATION UNIT
510 DRIVE
511 REMOVABLE RECORDING MEDIUM

## INTERNATIONAL SEARCH REPORT

| International application No. |
|---|
| **PCT/JP2021/034952** |

**A. CLASSIFICATION OF SUBJECT MATTER**

*H04S 7/00*(2006.01)i
FI: H04S7/00 320

According to International Patent Classification (IPC) or to both national classification and IPC

**B. FIELDS SEARCHED**

Minimum documentation searched (classification system followed by classification symbols)

H04S7/00

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | WO 2018/096954 A1 (SONY CORP.) 31 May 2018 (2018-05-31) paragraphs [0089], [0090], [0121]-[0123], [0220]-[0222], [0227], [0236] | 1-5, 9-11, 15-16 |
| Y | | 6-8, 12-14 |
| Y | WO 2019/198540 A1 (SONY CORP.) 17 October 2019 (2019-10-17) paragraph [0031] | 6-8, 12-14 |
| Y | JP 2002-171460 A (SONY CORP.) 14 June 2002 (2002-06-14) paragraph [0032] | 12-14 |

☐ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **22 November 2021** | **07 December 2021** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

**INTERNATIONAL SEARCH REPORT**
Information on patent family members

International application No.

**PCT/JP2021/034952**

| Patent document cited in search report | | | Publication date (day/month/year) | Patent family member(s) | | | Publication date (day/month/year) |
|---|---|---|---|---|---|---|---|
| WO | 2018/096954 | A1 | 31 May 2018 | US | 2020/0053499 | A1 | |
| | | | | paragraphs [0140], [0141], [0172]-[0174], [0273]-[0288], [0301], [0302], [0321]-[0326] | | | |
| | | | | EP | 3547718 | A1 | |
| | | | | CN | 109983786 | A | |
| WO | 2019/198540 | A1 | 17 October 2019 | US | 2021/0176582 | A1 | |
| | | | | paragraph [0047] | | | |
| | | | | EP | 3779976 | A1 | |
| JP | 2002-171460 | A | 14 June 2002 | US | 2002/0071661 | A1 | |
| | | | | paragraph [0038] | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2019198540 A